# EUROPEAN PATENT SPECIFICATION

(11) **EP 2 855 589 B1**
(45) Date of publication and mention of the grant of the patent: **22.06.2016**
(21) Application number: 13734853.8
(22) Date of filing: 24.05.2013
(51) Int. Cl.: C08L 69/00

(54) **FLAME RETARDANT THERMOPLASTIC COMPOSITIONS, METHODS OF MANUFACTURE THEREOF AND ARTICLES COMPRISING THE SAME**
FEUERFESTE THERMOPLASTISCHE HARZZUSAMMENSETZUNGEN, HERSTELLUNGSVERFAHREN DAFÜR UND ARTIKEL DAMIT
COMPOSITIONS THERMOPLASTIQUES IGNIFUGEANTES, LEURS PROCÉDÉS DE FABRICATION ET ARTICLES LES CONTENANT

(30) Priority: 24.05.2012 US 201261651487 P; 04.01.2013 US 201361748795 P
(43) Date of publication of application: 08.04.2015
(73) Proprietor: SABIC Innovative Plastics IP B.V., 4612 PX Bergen op Zoom (NL)
(72) Inventor: CHEN, Lin, Shanghai 201210 (CN); SHEN, Dake, Shanghai 201210 (CN); WAN, Shun, Shanghai 200333 (CN); SHI, Hongtao, Shanghai 200070 (CN)
(74) Representative: Stiebe, Lars Magnus
(86) International application number: PCT/IB2013/054310
(87) International publication number: WO 2013/175448

(56) References cited:
- WO-A1-03/020827
- WO-A1-2012/058821
- DE-A1- 19 828 538

## Description

### BACKGROUND

This disclosure relates to flame retardant thermoplastic compositions, methods of manufacture thereof and to articles comprising the same. In particular, this disclosure relates to flame retardant polyesters and to flame retardant polyester blends. In particular too, this disclosure relates to flame retardant polyphenylene ethers and to flame retardant polyphenylene ether blends.

In electronic and electrical devices such as notebook personal computers, e-books, and tablet personal computers, metallic body panels are being replaced by materials that are lighter in weight and offer a robust combination of mechanical properties. These lighter materials result in weight savings, cost savings, and enable the manufacture of complex designs. While these lighter materials can be used to manufacture panels having thinner cross-sectional thicknesses, it is desirable to improve the stiffness of the material to prevent warping, while at the same time improve the impact resistance. It is also desirable to improve the flame retardancy of the material to reduce fire related hazards.

WO 2012/058821 A1 discloses a flame retardant composition comprising polycarbonate; polybutylene terephthalate; polysiloxane-polycarbonate copolymer; and diphosphate flame retardant. DE 198 28 538 A1 and WO 03/020827 A1 describe flame retardant compositions comprising polycarbonate; impact modifier; and phosphazene flame retardant.

### SUMMARY

Disclosed herein is a flame retardant composition comprising 10 to 75 weight percent of a polycarbonate; 10 to 30 weight percent of a polyester; 10 to 35 weight percent of a polysiloxane-polycarbonate copolymer; and a phosphazene flame retardant, where all weight percents are based on the total weight of the flame retardant composition.

Disclosed herein too is a method of manufacturing a flame retardant composition comprising blending 10 to 75 weight percent of a polycarbonate; 10 to 30 weight percent of a polyester; 10 to 35 weight percent of a polysiloxane-polycarbonate copolymer; and a phosphazene flame retardant, where all weight percents are based on the total weight of the flame retardant composition.

Disclosed herein too are articles manufactured from the foregoing composition.

### DETAILED DESCRIPTION

As used herein the singular forms "a," "an," and "the" include plural referents. The term "combination" is inclusive of blends, mixtures, alloys, reaction products, and the like. Unless defined otherwise, technical and scientific terms used herein have the same meaning as is commonly understood by one of skill. Compounds are described using standard nomenclature. The term "and a combination thereof" is inclusive of the named component and/or other components not specifically named that have essentially the same function.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount.

The transition term "comprising" is inclusive of the transition terms "consisting of" and "consisting essentially of." The term "and/or" is used herein to mean both "and" as well as "or". For example, "A and/or B" is construed to mean A, B or A and B.

All ranges are inclusive of endpoints and all numbers between the endpoints. Various numbers pertaining to a specified range are combinable.

All ASTM tests and data are from the 2003 edition of the Annual Book of ASTM Standards unless otherwise indicated. All cited references are incorporated herein by reference.

Disclosed herein is a flame retardant composition that comprises a polyester and/or a polyester blend, a polycarbonate, a polysiloxane-polycarbonate copolymer and a phosphazene flame retardant compound. In an embodiment, the polyester blend can include a blend of a polyester with a copolymer of a polyester and a polycarbonate termed a copolyester carbonate, which will be detailed later. The flame retardant composition displays a suitable combination of stiffness and ductility as well as a low melt viscosity that renders it easily processable. The flame retardant composition can be used in electronics goods such as notebook personal computers, e-books, tablet personal computers, and the like. The flame retardant composition is transparent at electromagnetic frequencies in the visible wavelength region. The flame retardant composition may alternatively be optically opaque at electromagnetic frequencies in the visible wavelength region.

Polyesters for use in the present flame retardant compositions having repeating structural units of formula (1) 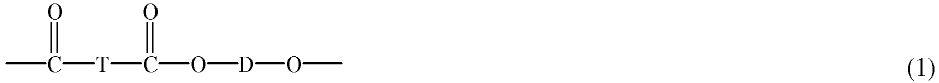 wherein each T is independently the same or different divalent C₆₋₁₀ aromatic group derived from a dicarboxylic acid or a chemical equivalent thereof, and each D is independently a divalent C₂₋₄ alkylene group derived from a dihydroxy compound or a chemical equivalent thereof. Copolyesters containing a combination of different T and/or D groups can be used. Chemical equivalents of diacids include the corresponding esters, alkyl esters, e.g., C₁₋₃ dialkyl esters, diaryl esters, anhydrides, salts, acid chlorides, acid bromides, and the like. Chemical equivalents of dihydroxy compounds include the corresponding esters, such as C₁₋₃ dialkyl esters, diaryl esters, and the like. The polyesters can be branched or linear.

Exemplary polyesters include poly(alkylene terephthalate) ("PAT"), poly(1,4-butylene terephthalate), ("PBT"), poly(ethylene terephthalate) ("PET"), poly(ethylene naphthalate) ("PEN"), poly(butylene naphthalate), ("PBN"), poly(propylene terephthalate) ("PPT"), poly(cyclohexane dimethanol terephthalate) ("PCT"), poly(cyclohexane-1,4-dimethylene cyclohexane-1,4-dicarboxylate) also known as poly(1,4-cyclohexanedimethanol 1,4-dicarboxylate) ("PCCD"), poly(cyclohexanedimethanol terephthalate), poly(cyclohexylenedimethylene-co-ethylene terephthalate), cyclohexanedimethanol-terephthalic acid-isophthalic acid copolymers and cyclohexanedimethanol-terephthalic acid-ethylene glycol ("PCTG" or "PETG") copolymers. When the molar proportion of cyclohexanedimethanol is higher than that of ethylene glycol the polyester is termed PCTG. When the molar proportion of ethylene glycol is higher than that of cyclohexane dimethanol the polyester is termed PETG.

The polyesters can be obtained by methods well known to those skilled in the art, including, for example, interfacial polymerization, melt-process condensation, solution phase condensation, and transesterification polymerization. Such polyester resins are typically obtained through the condensation or ester interchange polymerization of the diol or diol equivalent component with the diacid or diacid chemical equivalent component. Methods for making polyesters and the use of polyesters in thermoplastic molding compositions are known in the art. Conventional polycondensation procedures are described in the following, see, generally, U.S. Pat. Nos. 2,465,319, 5,367,011 and 5,411,999. The condensation reaction can be facilitated by the use of a catalyst, with the choice of catalyst being determined by the nature of the reactants. The various catalysts are known in the art. For example, a dialkyl ester such as dimethyl terephthalate can be transesterified with butylene glycol using acid catalysis, to generate poly(butylene terephthalate). It is possible to use a branched polyester in which a branching agent, for example, a glycol having three or more hydroxyl groups or a trifunctional or multifunctional carboxylic acid has been incorporated.

Commercial examples of PBT include those available under the trade names VALOX 315 and VALOX 195, manufactured by SABIC.

A combination of polyesters can be used, for example, a combination of virgin polyesters (polyesters derived from monomers rather than recycled polymer, including virgin poly(1,4-butylene terephthalate). Also contemplated herein are second polyesters comprising minor amounts, e.g., 0.5 to 30 wt%, of units derived from aliphatic acids and/or aliphatic polyols to form copolyesters. The aliphatic polyols include glycols, such as poly(ethylene glycol). Such polyesters can be made following the teachings of, for example, U.S. Pat. Nos. 2,465,319 to Whinfield et al., and 3,047,539 to Pengilly. Second polyesters comprising block copolyester resin components are also contemplated, and can be prepared by the transesterification of (a) straight or branched chain poly(alkylene terephthalate) and (b) a copolyester of a linear aliphatic dicarboxylic acid and, optionally, an aromatic dibasic acid such as terephthalic or isophthalic acid with one or more straight or branched chain dihydric aliphatic glycols. Especially useful when high melt strength is important are branched high melt viscosity resins, which include a small amount of, e.g., up to 5 mole percent based on the acid units of a branching component containing at least three ester forming groups. The branching component can be one that provides branching in the acid unit portion of the polyester, in the glycol unit portion, or it can be a hybrid branching agent that includes both acid and alcohol functionality. Illustrative of such branching components are tricarboxylic acids, such as trimesic acid, and lower alkyl esters thereof, and the like; tetracarboxylic acids, such as pyromellitic acid, and lower alkyl esters thereof, and the like; or preferably, polyols, and especially preferably, tetrols, such as pentaerythritol; triols, such as trimethylolpropane; dihydroxy carboxylic acids; and hydroxydicarboxylic acids and derivatives, such as dimethyl hydroxyterephthalate, and the like. Branched poly(alkylene terephthalate) resins and their preparation are described, for example, in U.S. Pat. No. 3,953,404 to Borman. In addition to terephthalic acid units, small amounts, e.g., from 0.5 to 15 mole percent of other aromatic dicarboxylic acids, such as isophthalic acid or naphthalene dicarboxylic acid, or aliphatic dicarboxylic acids, such as adipic acid, can also be present, as well as a minor amount of diol component other than that derived from 1,4-butanediol, such as ethylene glycol or cyclohexane dimethanol, and the like, as well as minor amounts of trifunctional, or higher, branching components, e.g., pentaerythritol, trimethyl trimesate, and the like.

In an embodiment, a PBT is used in combination with a poly(ethylene terephthalate), poly(1,4-butylene terephthalate), poly(ethylene naphthalate), poly(1,4-butylene naphthalate), poly(trimethylene terephthalate), poly(1,4-cyclohexanenedimethylene 1,4-cyclohexanedicarboxylate), poly(1,4-cyclohexanedimethylene terephthalate), poly(1,4-butylene-co-1,4-but-2-ene diol terephthalate), poly(cyclohexanedimethylene-co-ethylene terephthalate), or a combination thereof. The weight ratio of PBT to other polyester can vary from 50:50 to 99:1, specifically from 80:20 to 99:1.

Any of the foregoing first and optional second polyesters can have an intrinsic viscosity of 0.4 to 2.0 deciliters per gram (dL/g), measured in a 60:40 by weight phenol/1,1,2,2-tetrachloroethane mixture at 23°C. The PBT can have a weight average molecular weight of 10,000 to 200,000 Daltons, specifically 50,000 to 150,000 Daltons as measured by gel permeation chromatography (GPC). The polyester component can also comprise a mixture of different batches of PBT prepared under different process conditions in order to achieve different intrinsic viscosities and/or weight average molecular weights. In an embodiment, a combination of polyesters having different viscosities is used, for example a combination comprising a first polyester having a viscosity from 0.5 to 1.0 dL/g and a second polyester having an intrinsic viscosity ranging from 1.1 to 1.4 dL/g. One or both of the polyesters can be a PBT. The weight ratio of the two polyesters of different viscosity can be adjusted to achieve the desired properties, and is generally within the range of 20:80 to 80:20, more specifically from 40:60 to 60:40.

The amount of the polyester in the compositions can be adjusted to provide the desired properties within the limits described herein, which varies with the specific application. The flame retardant composition can accordingly comprise 10 to 60 wt%, specifically 18 to 55 wt%, and more specifically 20 to 40 wt% of the polyester, based on the total weight of the flame retardant composition. Exemplary polyesters are polybutylene terephthalate or polyethylene terephthalate. In an exemplary embodiment, the polyester is present in an amount of 10 to 30 wt%, based on the total weight of the composition.

In an embodiment, a "polycarbonate" means compositions having repeating structural carbonate units of formula (2) 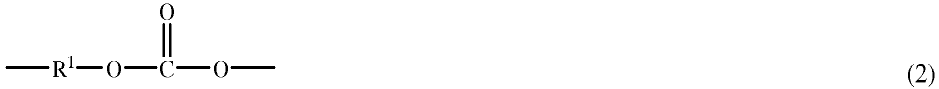 in which at least 60 percent of the total number of R¹ groups contain aromatic moieties and the balance thereof are aliphatic, alicyclic, or aromatic. In an embodiment, each R¹ is a C₆₋₃₀ aromatic group, that is, contains at least one aromatic moiety. R¹ can be derived from a dihydroxy compound of the formula HO-R¹-OH, in particular of formula (3)

HO-A¹-Y¹-A²-OH (3)

wherein each of A¹ and A² is a monocyclic divalent aromatic group and Y¹ is a single bond or a bridging group having one or more atoms that separate A¹ from A². In an embodiment, one atom separates A¹ from A². Specifically, each R¹ can be derived from a dihydroxy aromatic compound of formula (4) 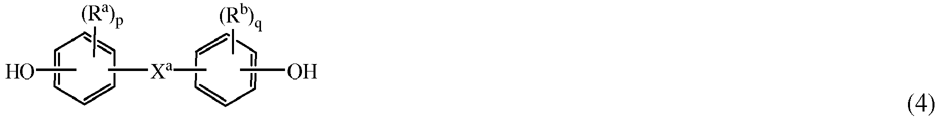 wherein R^{a} and R^{b} are each independently hydrogen, a halogen, C₁₋₁₂ alkoxy, or C₁₋₁₂ alkyl; and p and q are each independently integers of 0 to 4. It will be understood that R^{a} is hydrogen when p is 0, and likewise R^{b} is hydrogen when q is 0. Also in formula (3), X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In an embodiment, p and q is each 1, and R^{a} and R^{b} are each a C₁₋₃ alkyl group, specifically methyl, disposed meta to the hydroxy group on each arylene group.

In an embodiment, X^{a} is a substituted or unsubstituted C₃₋₁₈ cycloalkylidene, a C₁₋₂₅ alkylidene of formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula -C(=R^{e})- wherein R^{e} is a divalent C₁₋₁₂ hydrocarbon group. groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene.

In another embodiment, X^{a} is a C₁₋₁₈ alkylene group, a C₃₋₁₈ cycloalkylene group, a fused C₆₋₁₈ cycloalkylene group, or a group of the formula -B¹-G-B²- wherein B¹ and B² are the same or different C₁₋₆ alkylene group and G is a C₃₋₁₂ cycloalkylidene group or a C₆₋₁₆ arylene group. For example, X^{a} can be a substituted C₃₋₁₈ cycloalkylidene of formula (5) 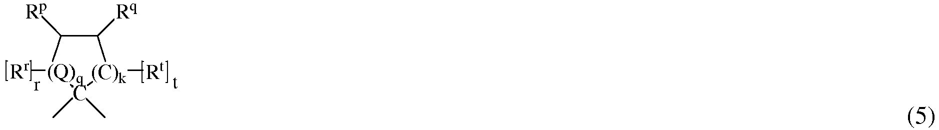 wherein R^{r}, R^{p}, R^{q}, and R^{t} are each independently hydrogen, halogen, oxygen, or C₁₋₁₂ hydrocarbon groups; Q is a direct bond, a carbon, or a divalent oxygen, sulfur, or -N(Z)-where Z is hydrogen, halogen, hydroxy, C₁₋₁₂ alkyl, C₁₋₁₂ alkoxy, or C₁₋₁₂ acyl; r is 0 to 2, t is 1 or 2, q is 0 or 1, and k is 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and i is 0, the ring as shown in formula (5) contains 4 carbon atoms, when k is 2, the ring as shown in formula (5) contains 5 carbon atoms, and when k is 3, the ring contains 6 carbon atoms. In an embodiment, two adjacent groups (e.g., R^{q} and R^{t} taken together) form an aromatic group, and in another embodiment, R^{q} and R^{t} taken together form one aromatic group and R^{r} and R^{p} taken together form a second aromatic group. When R^{q} and R^{t} taken together form an aromatic group, R^{p} can be a double-bonded oxygen atom, i.e., a ketone.

Bisphenols (5) can be used in the manufacture of polycarbonates containing phthalimidine carbonate units of formula (5a) 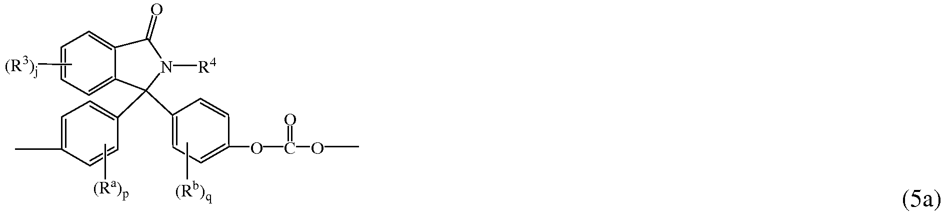 wherein R^{a}, R^{b}, p, and q are as in formula (5), R³ is each independently a C₁₋₆ alkyl group, j is 0 to 4, and R₄ is a C₁₋₆ alkyl, phenyl, or phenyl substituted with up to five C₁₋₆ alkyl groups. In particular, the phthalimidine carbonate units are of formula (5b) 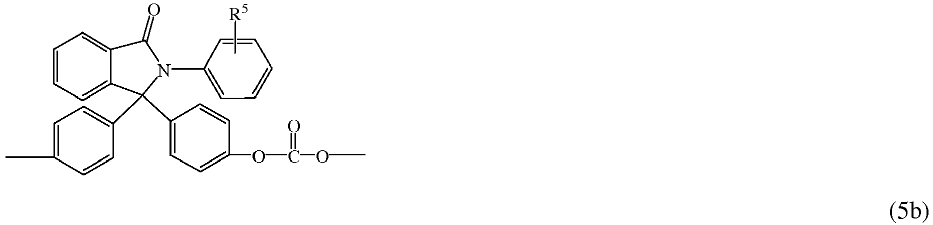 wherein R⁵ is hydrogen or a C₁₋₆ alkyl. In an embodiment, R⁵ is hydrogen. Carbonate units (5a) wherein R⁵ is hydrogen can be derived from 2-phenyl-3,3'-bis(4-hydroxy phenyl)phthalimidine (also known as N-phenyl phenolphthalein bisphenol, or "PPPBP") (also known as 3,3-bis(4-hydroxyphenyl)-2-phenylisoindolin-1-one).

Other bisphenol carbonate repeating units of this type are the isatin carbonate units of formula (5c) and (5d) 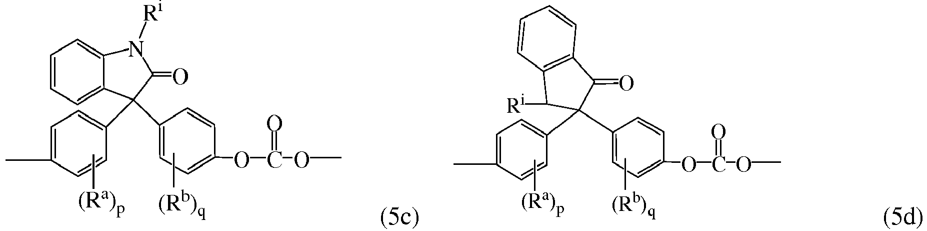 wherein R^{a} and R^{b} are each independently C₁₋₁₂ alkyl, p and q are each independently 0 to 4, and Rⁱ is C₁₋₁₂ alkyl, phenyl, optionally substituted with 1 5 to C₁₋₁₀ alkyl, or benzyl optionally substituted with 1 to 5 C₁₋₁₀ alkyl. In an embodiment, R^{a} and R^{b} are each methyl, p and q are each independently 0 or 1, and Rⁱ is C₁₋₄ alkyl or phenyl.

Examples of bisphenol carbonate units derived from bisphenols (5) wherein X^{b} is a substituted or unsubstituted C₃₋₁₈ cycloalkylidene include the cyclohexylidene-bridged, alkyl-substituted bisphenol of formula (5e) 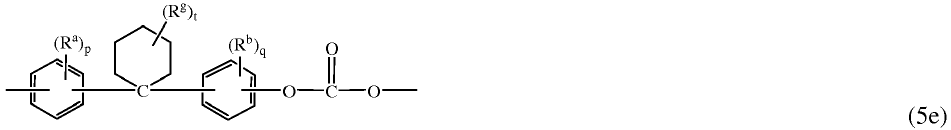 wherein R^{a} and R^{b} are each independently C₁₋₁₂ alkyl, R^{g} is C₁₋₁₂ alkyl, p and q are each independently 0 to 4, and t is 0 to 10. In a specific embodiment, at least one of each of R^{a} and R^{b} are disposed meta to the cyclohexylidene bridging group. In an embodiment, R^{a} and R^{b} are each independently C₁₋₄ alkyl, R^{g} is C₁₋₄ alkyl, p and q are each 0 or 1, and t is 0 to 5. In another specific embodiment, R^{a}, R^{b}, and R^{g} are each methyl, r and s are each 0 or 1, and t is 0 or 3, specifically 0.

Examples of other bisphenol carbonate units derived from bisphenol (4) wherein X^{b} is a substituted or unsubstituted C₃₋₁₈ cycloalkylidene include adamantyl units (5f) and units (5g) 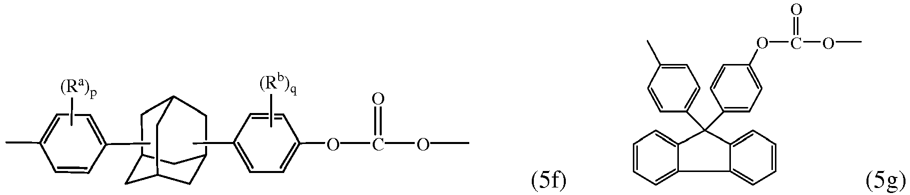 wherein R^{a} and R^{b} are each independently C₁₋₁₂ alkyl, and p and q are each independently 1 to 4. In a specific embodiment, at least one of each of R^{a} and R^{b} are disposed meta to the cycloalkylidene bridging group. In an embodiment, R^{a} and R^{b} are each independently C₁₋₃ alkyl, and p and q are each 0 or 1. In another specific embodiment, R^{a}, R^{b} are each methyl, p and q are each 0 or 1. Carbonates containing units (5a) to (5g) are useful for making polycarbonates with high glass transition temperatures (Tg) and high heat distortion temperatures.

Other useful aromatic dihydroxy compounds of the formula HO-R¹-OH include compounds of formula (6) 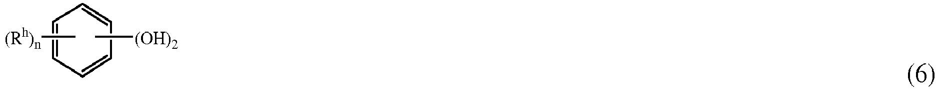 wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. The halogen is usually bromine.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-l-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination comprising at least one of the foregoing dihydroxy compounds.

Specific examples of bisphenol compounds of formula (4) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A, in which each of A¹ and A² is p-phenylene and Y¹ is isopropylidene in formula (3).

The polycarbonates can have an intrinsic viscosity, as determined in chloroform at 25°C, of 0.3 to 1.5 deciliters per gram (dl/gm), specifically 0.45 to 1.0 dl/gm. The polycarbonates can have a weight average molecular weight of 10,000 to 200,000 Daltons, specifically 20,000 to 100,000 Daltons, as measured by gel permeation chromatography (GPC), using a crosslinked styrene-divinylbenzene column and calibrated to polycarbonate references. GPC samples are prepared at a concentration of 1 mg per ml, and are eluted at a flow rate of 1.5 ml per minute. An exemplary polycarbonate has a weight average molecular weight of 28,000 to 30,000 Daltons as measured by gel permeation chromatography (GPC), using a crosslinked styrene-divinylbenzene column and calibrated to polycarbonate references.

"Polycarbonates" includes homopolycarbonates (wherein each R¹ in the polymer is the same), copolymers comprising different R¹ moieties in the carbonate ("copolycarbonates"), copolymers comprising carbonate units and other types of polymer units, such as ester units, and combinations comprising at least one of homopolycarbonates and/or copolycarbonates.

A specific type of copolymer is a polyester carbonate, also known as a polyester-polycarbonate. Such copolymers further contain, in addition to recurring carbonate chain units of formula (2), repeating units of formula (7). 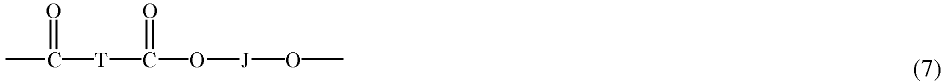 wherein J is a divalent group derived from a dihydroxy compound, and can be, for example, a C₂₋₁₀ alkylene, a C₆₋₂₀ cycloalkylene a C₆₋₂₀ arylene, or a polyoxyalkylene group in which the alkylene groups contain 2 to 6 carbon atoms, specifically 2, 3, or 4 carbon atoms; and T is a divalent group derived from a dicarboxylic acid, and can be, for example, a C₂₋₁₀ alkylene, a C₆₋₂₀ cycloalkylene, or a C₆₋₂₀ arylene. Copolyesters containing a combination of different T and/or J groups can be used. The polyesters can be branched or linear.

In an embodiment, J is a C₂₋₃₀ alkylene group having a straight chain, branched chain, or cyclic (including polycyclic) structure. In another embodiment, J is derived from an aromatic dihydroxy compound of formula (7) above. In another embodiment, J is derived from an aromatic dihydroxy compound of formula (4) above. In another embodiment, J is derived from an aromatic dihydroxy compound of formula (6) above.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is 91:9 to 2:98. In another specific embodiment, J is a C₂₋₆ alkylene group and T is p-phenylene, m-phenylene, naphthalene, a divalent cycloaliphatic group, or a combination thereof. This class of polyester includes the poly(alkylene terephthalates).

The molar ratio of ester units to carbonate units in the copolymers can vary broadly, for example 1:99 to 99:1, specifically 10:90 to 90:10, more specifically 25:75 to 75:25, depending on the desired properties of the final composition.

In a specific embodiment, the polyester unit of a polyester-polycarbonate is derived from the reaction of a combination of isophthalic and terephthalic diacids (or derivatives thereof) with resorcinol. In another specific embodiment, the polyester unit of a polyester-polycarbonate is derived from the reaction of a combination of isophthalic acid and terephthalic acid with bisphenol A. In a specific embodiment, the polycarbonate units are derived from bisphenol A. In another specific embodiment, the polycarbonate units are derived from resorcinol and bisphenol A in a molar ratio of resorcinol carbonate units to bisphenol A carbonate units of 1:99 to 99:1.

Polycarbonates can be manufactured by processes such as interfacial polymerization and melt polymerization. Although the reaction conditions for interfacial polymerization can vary, a process generally involves dissolving or dispersing a dihydric phenol reactant in aqueous caustic soda or potash, adding the resulting mixture to a water-immiscible solvent medium, and contacting the reactants with a carbonate precursor in the presence of a catalyst such as triethylamine and/or a phase transfer catalyst, under controlled pH conditions, e.g., 8 to 12. The most commonly used water immiscible solvents include methylene chloride, 1,2-dichloroethane, chlorobenzene, toluene, and the like.

Carbonate precursors include a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an embodiment, an interfacial polymerization reaction to form carbonate linkages uses phosgene as a carbonate precursor, and is referred to as a phosgenation reaction.

Among the phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst can be 0.1 to 10 wt% based on the weight of bisphenol in the phosgenation mixture. In another embodiment an effective amount of phase transfer catalyst can be 0.5 to 2 wt% based on the weight of bisphenol in the phosgenation mixture.

Alternatively, melt processes can be used to make the polycarbonates. Melt polymerization may be conducted as a batch process or as a continuous process. In either case, the melt polymerization conditions used may comprise two or more distinct reaction stages, for example, a first reaction stage in which the starting dihydroxy aromatic compound and diaryl carbonate are converted into an oligomeric polycarbonate and a second reaction stage wherein the oligomeric polycarbonate formed in the first reaction stage is converted to high molecular weight polycarbonate. Such "staged" polymerization reaction conditions are especially suitable for use in continuous polymerization systems wherein the starting monomers are oligomerized in a first reaction vessel and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight of about 1,000 to about 7,500 Daltons. In one or more subsequent polymerization stages the number average molecular weight (Mn) of the polycarbonate is increased to between about 8,000 and about 25,000 Daltons (using polycarbonate standard).

The term "melt polymerization conditions" is understood to mean those conditions necessary to effect reaction between a dihydroxy aromatic compound and a diaryl carbonate in the presence of a transesterification catalyst. Typically, solvents are not used in the process, and the reactants dihydroxy aromatic compound and the diaryl carbonate are in a molten state. The reaction temperature can be about 100°C to about 350°C, specifically about 180°C to about 310°C. The pressure may be at atmospheric pressure, supra-atmospheric pressure, or a range of pressures from atmospheric pressure to about 15 torr in the initial stages of the reaction, and at a reduced pressure at later stages, for example about 0.2 to about 15 torr. The reaction time is generally about 0.1 hours to about 10 hours.

The diaryl carbonate ester can be diphenyl carbonate, or an activated diphenyl carbonate having electron-withdrawing substituents on the aryl groups, such as bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing.

Catalysts used in the melt polymerization of polycarbonates can include alpha or beta catalysts. Beta catalysts are typically volatile and degrade at elevated temperatures. Beta catalysts are therefore preferred for use at early low-temperature polymerization stages. Alpha catalysts are typically more thermally stable and less volatile than beta catalysts.

The alpha catalyst can comprise a source of alkali or alkaline earth ions. The sources of these ions include alkali metal hydroxides such as lithium hydroxide, sodium hydroxide, and potassium hydroxide, as well as alkaline earth hydroxides such as magnesium hydroxide and calcium hydroxide. Other possible sources of alkali and alkaline earth metal ions include the corresponding salts of carboxylic acids (such as sodium acetate) and derivatives of ethylene diamine tetraacetic acid (EDTA) (such as EDTA tetrasodium salt, and EDTA magnesium disodium salt). Other alpha transesterification catalysts include alkali or alkaline earth metal salts of a non-volatile inorganic acid such as NaH₂PO₃, NaH₂PO₄, Na₂HPO₃, KH₂PO₄, CsH₂PO₄, Cs₂HPO₄, and the like, or mixed salts of phosphoric acid, such as NaKHPO₄, CsNaHPO₄, CsKHPO₄, and the like. Combinations comprising at least one of any of the foregoing catalysts can be used.

Possible beta catalysts can comprise a quaternary ammonium compound, a quaternary phosphonium compound, or a combination comprising at least one of the foregoing. The quaternary ammonium compound can be a compound of the structure (R⁴)₄N⁺X⁻, wherein each R⁴ is the same or different, and is a C₁₋₂₀ alkyl group, a C₄₋₂₀ cycloalkyl group, or a C₄₋₂₀ aryl group; and X⁻ is an organic or inorganic anion, for example a hydroxide, halide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing. Tetramethyl ammonium hydroxide is often used. The quaternary phosphonium compound can be a compound of the structure (R⁵)₄P⁺X⁻, wherein each R⁵ is the same or different, and is a C₁₋₂₀ alkyl group, a C₄₋₂₀ cycloalkyl group, or a C₄₋₂₀ aryl group; and X- is an organic or inorganic anion, for example a hydroxide, halide, carboxylate, sulfonate, sulfate, formate, carbonate, or bicarbonate. Where X- is a polyvalent anion such as carbonate or sulfate it is understood that the positive and negative charges in the quaternary ammonium and phosphonium structures are properly balanced. For example, where R²⁰ - R²³ are each methyl groups and X⁻ is carbonate, it is understood that X- represents 2(CO₃⁻²). Examples of organic quaternary phosphonium compounds include tetramethyl phosphonium hydroxide, tetramethyl phosphonium acetate, tetramethyl phosphonium formate, tetrabutyl phosphonium hydroxide, tetrabutyl phosphonium acetate (TBPA), tetraphenyl phosphonium acetate, tetraphenyl phosphonium phenoxide, and combinations comprising at least one of the foregoing. TBPA is often used.

The amount of alpha and beta catalyst used can be based upon the total number of moles of dihydroxy compound used in the polymerization reaction. When referring to the ratio of beta catalyst, for example a phosphonium salt, to all dihydroxy compounds used in the polymerization reaction, it is convenient to refer to moles of phosphonium salt per mole of the dihydroxy compound, meaning the number of moles of phosphonium salt divided by the sum of the moles of each individual dihydroxy compound present in the reaction mixture. The alpha catalyst can be used in an amount sufficient to provide 1 x 10⁻² to 1 x 10⁻⁸ moles, specifically, 1 x 10⁻⁴ to 1 x 10⁻⁷ moles of metal per mole of the dihydroxy compounds used. The amount of beta catalyst (e.g., organic ammonium or phosphonium salts) can be 1 x 10⁻² to 1 x 10⁻⁵, specifically 1 x 10⁻³ to 1 x 10⁻⁴ moles per total mole of the dihydroxy compounds in the reaction mixture.

All types of polycarbonate end groups are contemplated as being useful in the polycarbonate composition, provided that such end groups do not significantly adversely affect desired properties of the compositions.

Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. Mixtures comprising linear polycarbonates and branched polycarbonates can be used.

In an embodiment, the polycarbonate is a branched polycarbonate comprising units as described above; greater than or equal to 3 mole%, based on the total moles of the polycarbonate, of moieties derived from a branching agent; and end-capping groups derived from an end-capping agent having a pKa between about 8.3 and about 11. The branching agent can comprise trimellitic trichloride, 1,1,1-tris(4-hydroxyphenyl)ethane or a combination of trimellitic trichloride and 1,1,1-tris(4-hydroxyphenyl)ethane, and the end-capping agent is phenol or a phenol containing a substituent of cyano group, aliphatic groups, olefinic groups, aromatic groups, halogens, ester groups, ether groups, or a combination comprising at least one of the foregoing. In a specific embodiment, the end-capping agent is phenol, p-t-butylphenol, p-methoxyphenol, p-cyanophenol, p-cumylphenol, or a combination comprising at least one of the foregoing.

A chain stopper (also referred to as a capping agent) can be included during polymerization. The chain stopper limits molecular weight growth rate, and so controls molecular weight in the polycarbonate. Chain stoppers include certain mono-phenolic compounds, mono-carboxylic acid chlorides, and/or mono-chloroformates. Mono-phenolic chain stoppers are exemplified by monocyclic phenols such as phenol and C₁-C₂₂ alkyl-substituted phenols such as p-cumyl-phenol, resorcinol monobenzoate, and p-and tertiarybutyl phenol; and monoethers of diphenols, such as p-methoxyphenol. Alkyl-substituted phenols with branched chain alkyl substituents having 8 to 9 carbon atom can be specifically mentioned. Certain mono-phenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Mono-carboxylic acid chlorides can also be used as chain stoppers. These include monocyclic, mono-carboxylic acid chlorides such as benzoyl chloride, C₁-C₂₂ alkyl-substituted benzoyl chloride, toluoyl chloride, halogen-substituted benzoyl chloride, bromobenzoyl chloride, cinnamoyl chloride, 4-nadimidobenzoyl chloride, and combinations thereof; polycyclic, mono-carboxylic acid chlorides such as trimellitic anhydride chloride, and naphthoyl chloride; and combinations of monocyclic and polycyclic mono-carboxylic acid chlorides. Chlorides of aliphatic monocarboxylic acids with less than or equal to 22 carbon atoms are useful.

Functionalized chlorides of aliphatic monocarboxylic acids, such as acryloyl chloride and methacryloyl chloride, are also useful. Also useful are mono-chloroformates including monocyclic, mono-chloroformates, such as phenyl chloroformate, alkyl-substituted phenyl chloroformate, p-cumyl phenyl chloroformate, toluene chloroformate, and combinations thereof.

Alternatively, melt processes can be used to make the polycarbonates. Generally, in the melt polymerization process, polycarbonates can be prepared by co-reacting, in a molten state, the dihydroxy reactant(s) and a diaryl carbonate ester, such as diphenyl carbonate, in the presence of a transesterification catalyst in a Banbury^{®} mixer, twin screw extruder, or the like to form a uniform dispersion. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing esters. In addition, useful transesterification catalysts can include phase transfer catalysts of formula (R³)₄Q⁺X, wherein each R³, Q, and X are as defined above. transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing.

The polyester-polycarbonates can also be prepared by interfacial polymerization. Rather than utilizing the dicarboxylic acid or diol per se, the reactive derivatives of the acid or diol, such as the corresponding acid halides, in particular the acid dichlorides and the acid dibromides can be used. Thus, for example instead of using isophthalic acid, terephthalic acid, or a combination comprising at least one of the foregoing acids, isophthaloyl dichloride, terephthaloyl dichloride, or a combination comprising at least one of the foregoing dichlorides can be used.

In addition to the polycarbonates described above, combinations of the polycarbonate with other thermoplastic polymers, for example combinations of homopolycarbonates and/or polycarbonate copolymers with polyesters, can be used. Useful polyesters can include, for example, polyesters having repeating units of formula (7), which include poly(alkylene dicarboxylates), liquid crystalline polyesters, and polyester copolymers. The polyesters described herein are generally completely miscible with the polycarbonates when blended.

The polyesters can be obtained by interfacial polymerization or melt-process condensation as described above, by solution phase condensation, or by transesterification polymerization wherein, for example, a dialkyl ester such as dimethyl terephthalate can be transesterified with ethylene glycol using acid catalysis, to generate poly(ethylene terephthalate). A branched polyester, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester, depending on the ultimate end use of the composition.

Useful polyesters can include aromatic polyesters, poly(alkylene esters) including poly(alkylene arylates), and poly(cycloalkylene diesters). Aromatic polyesters can have a polyester structure according to formula (7), wherein J and T are each aromatic groups as described hereinabove. In an embodiment, useful aromatic polyesters can include, for example, poly(isophthalate-terephthalate-resorcinol) esters, poly(isophthalate-terephthalate-bisphenol A) esters, poly[(isophthalate-terephthalate-resorcinol) ester-co-(isophthalate-terephthalate-bisphenol A)] ester, or a combination comprising at least one of these. Also contemplated are aromatic polyesters with a minor amount, e.g., 0.5 to 10 weight percent, based on the total weight of the polyester, of units derived from an aliphatic diacid and/or an aliphatic polyol to make copolyesters. Poly(alkylene arylates) can have a polyester structure according to formula (7), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like.

Specifically, where T is 1,4-phenylene, the poly(alkylene arylate) is a poly(alkylene terephthalate). In addition, for poly(alkylene arylate), specifically useful alkylene groups J include, for example, ethylene, 1,4-butylene, and bis-(alkylene-disubstituted cyclohexane) including cis- and/or trans-1,4-(cyclohexylene)dimethylene. Examples of poly(alkylene terephthalates) include poly(ethylene terephthalate) (PET), poly(1,4-butylene terephthalate) (PBT), and poly(propylene terephthalate) (PPT). Also useful are poly(alkylene naphthalate)s, such as poly(ethylene naphthalate) (PEN), and poly(butylene naphthalate) (PBN). A specifically useful poly(cycloalkylene diester) is poly(cyclohexanedimethylene terephthalate) (PCT). Combinations comprising at least one of the foregoing polyesters can also be used.

Copolymers comprising alkylene terephthalate repeating ester units with other ester groups can also be useful. Specifically useful ester units can include different alkylene terephthalate units, which can be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexane-dimethanol-1,4-cyclohexanedicarboxylate) (PCCD), having recurring units of formula (9) 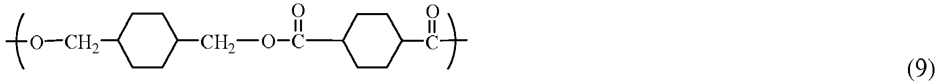 wherein, as described using formula (7), J is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

The polycarbonate and polyester can be used in a weight ratio of 1:99 to 99:1, specifically 10:90 to 90:10, and more specifically 30:70 to 70:30, depending on the function and properties desired. It is desirable for such a polyester and polycarbonate blend to have an MVR of 5 to 150 cc/10 min., specifically 7 to 125 cc/10 min, more specifically 9 to 110 cc/10 min, and still more specifically 10 to 100 cc/10 min., measured at 300°C and a load of 1.2 kilograms according to ASTM D1238-04.

It is desirable for such a polyester and polycarbonate blend to have an MVR of 5 to 150 cc/10 min., specifically 7 to 125 cc/10 min, more specifically 9 to 110 cc/10 min, and still more specifically 10 to 100 cc/10 min., measured at 300°C and a load of 1.2 kilograms according to ASTM D1238-04.

The polycarbonates or copolyester carbonates can be used in amounts of 10 to 75 wt%, 20 to 60 wt%, specifically 25 to 55 wt%, and more specifically 30 to 50 wt%, based on the total weight of the flame retardant composition.

The flame retardant composition further comprises a polysiloxane-polycarbonate copolymer, also referred to as a polysiloxane-carbonate. The polysiloxane (also referred to herein as "siloxane") blocks of the copolymer comprise repeating diorganosiloxane units as in formula (10) 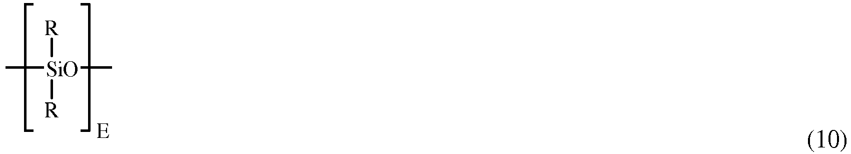 wherein each R is independently a C₁₋₁₃ monovalent organic group. For example, R can be a C₁-C₁₃ alkyl, C₁-C₁₃ alkoxy, C₂-C₁₃ alkenyl group, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. Combinations of the foregoing R groups can be used in the same copolymer.

The value of E in formula (10) can vary widely depending on the type and relative amount of each component in the flame retardant composition, the desired properties of the composition, and like considerations. Generally, E has an average value of 2 to 1,000, specifically 2 to 500, more specifically 5 to 100. In an embodiment, E has an average value of 10 to 75, and in still another embodiment, E has an average value of 40 to 60. Where E is of a lower value, e.g., less than 40, it can be desirable to use a relatively larger amount of the polysiloxane-polycarbonate copolymer. Conversely, where E is of a higher value, e.g., greater than 40, a relatively lower amount of the polysiloxane-polycarbonate copolymer can be used.

In an embodiment, a combination of a first and a second (or more) polysiloxane-polycarbonate copolymers can be used, wherein the average value of E of the first copolymer is less than the average value of E of the second copolymer.

In an embodiment, the polysiloxane blocks are of formula (11) 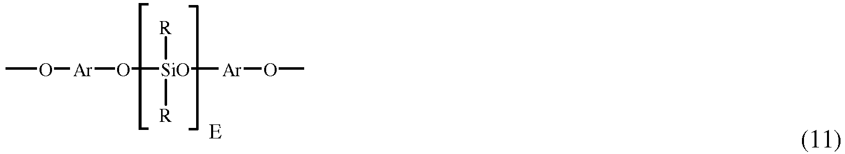 wherein E is as defined above; each R can be the same or different, and is as defined above; and Ar can be the same or different, and is a substituted or unsubstituted C₆-C₃₀ arylene group, wherein the bonds are directly connected to an aromatic moiety. Ar groups in formula (11) can be derived from a C₆-C₃₀ dihydroxyarylene compound, for example a dihydroxyarylene compound of formula (3) or (6) above. Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polysiloxane blocks are of formula (12) 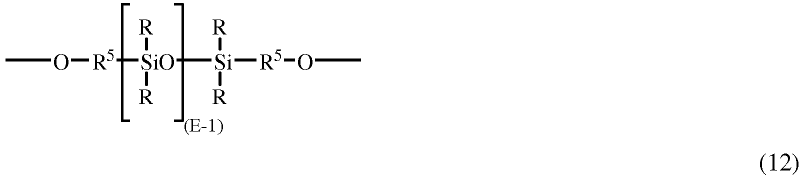 wherein R and E are as described above, and each R⁵ is independently a divalent C₁-C₃₀ organic group, and wherein the polymerized polysiloxane unit is the reaction residue of its corresponding dihydroxy compound. In a specific embodiment, the polysiloxane blocks are of formula (13): 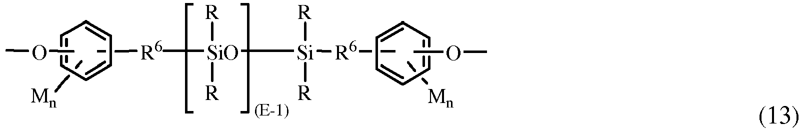 wherein R and E are as defined above. R⁶ in formula (13) is a divalent C₂-C₈ aliphatic group. Each M in formula (13) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1,2, 3, or 4.

In an embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R² is a divalent C₁-C₃ aliphatic group, and R is methyl. In another embodiment the polysiloxane-polycarbonate copolymers comprise bisphenol A carbonate units, and siloxane units of the formula 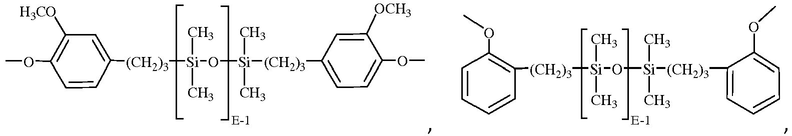 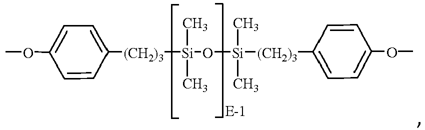 or a combination comprising at least one of the foregoing, wherein E has an average value of 2 to 200, specifically 2 to 100, 2 to 60 or 2 to 50.

Blocks of formula (11) can be derived from the corresponding dihydroxy polysiloxane of formula (14) 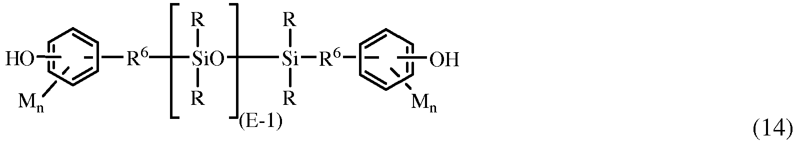 wherein R, E, M, R⁶, and n are as described above. Such dihydroxy polysiloxanes can be made by effecting a platinum-catalyzed addition between a siloxane hydride of formula (15) 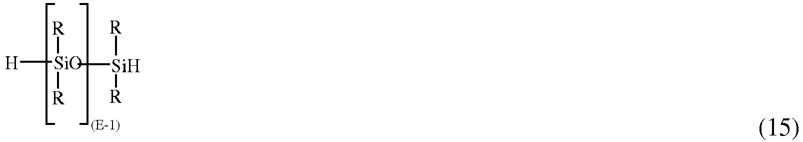 wherein R and E are as previously defined, and an aliphatically unsaturated monohydric phenol. Exemplary aliphatically unsaturated monohydric phenols include eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Combinations comprising at least one of the foregoing can also be used.

The polysiloxane-polycarbonate can comprise 50 to 99 weight percent of carbonate units and 1 to 50 weight percent siloxane units. Within this range, the polysiloxane-polycarbonate copolymer can comprise 70 to 98 weight percent, more specifically 75 to 97 weight percent of carbonate units and 2 to 30 weight percent, more specifically 3 to 25 weight percent siloxane units. In an exemplary embodiment, the polysiloxane-polycarbonate is endcapped with para-cumyl phenol.

In an embodiment, an exemplary polysiloxane-polycarbonate block copolymer is one having the structure shown in the formula (16) below: 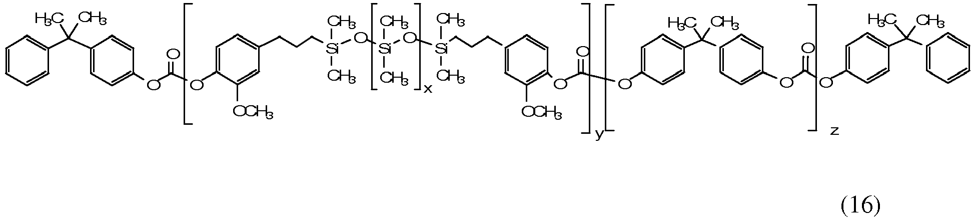 where the polysiloxane blocks are endcapped with eugenol, where x is 1 to 100, specifically 5 to 85, specifically 10 to 70, specifically 15 to 65, and more specifically 40 to 60. In an embodiment, y is 1 to 90 and z is 1 to 600. The polysiloxane block may be randomly distributed or controlled distributed amongst the polycarbonate blocks. In an embodiment, x is 30 to 50, y is 10 to 30, and z is 450 to 600.

When the polysiloxane polycarbonate copolymer comprises eugenol endcapped polysiloxane, the flame retardant composition comprises 0 to 25 wt% of the polysiloxane-polycarbonate copolymer. The polysiloxane content is 1 to 20 wt%, specifically 1 to 16 wt%, specifically 2 to 14 wt%, and more specifically 3 to 6 wt%, based on the total weight of the polysiloxane-polycarbonate copolymer. In an embodiment, the number average molecular weight of the polysiloxane block is 29,000 to 30,000 Daltons using a bisphenol A polycarbonate absolute molecular weight standard.

In an embodiment, the polysiloxane-polycarbonate copolymer comprises 10 wt% or less, specifically 6 wt% or less, and more specifically 4 wt% or less, of the polysiloxane based on the total weight of the polysiloxane-polycarbonate copolymer. Polysiloxane-polycarbonate copolymers containing 10 wt% or less are generally optically transparent and are sometimes referred to as EXL-T as commercially available from Sabic. The transparent polysiloxane-polycarbonate copolymers can be manufactured using one or both of the tube reactor processes described in U.S. Patent Application No. 2004/0039145A1 or the process described in U.S. Patent No. 6,723,864 may be used to synthesize the polysiloxane-polycarbonate copolymers.

In another embodiment, the polysiloxane-polycarbonate copolymer comprises 10 wt% or more, specifically 12 wt% or more, and more specifically 14 wt% or more, of the polysiloxane copolymer based on the total weight of the polysiloxane-polycarbonate copolymer. Polysiloxane-polycarbonate copolymers containing 10 wt% or more are generally optically opaque and are sometimes referred to as EXL-P as commercially available from Sabic. These polysiloxane-polycarbonate copolymers can be manufactured by the methods described in U.S. 6,072,011 to Hoover.

Polysiloxane-polycarbonates can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polysiloxane-polycarbonate can have a melt volume flow rate, measured at 300°C/1.2 kg, of 1 to 50 cubic centimeters per 10 minutes (cc/10 min), specifically 2 to 30 cc/10 min. Mixtures of polysiloxane-polycarbonates of different flow properties can be used to achieve the overall desired flow property.

The polysiloxane-polycarbonate is present in the flame retardant composition in an amount of 10 to 40 wt%, specifically 15 to 38 wt%, specifically 16 to 36 wt%, and more specifically 25 to 35 wt%, based on the total weight of the flame retardant composition.

The flame retardant composition can further include impact modifier(s). These impact modifiers include elastomer-modified graft copolymers comprising (i) an elastomeric (i.e., rubbery) polymer substrate having a Tg less than or equal to 10°C, more specifically less than or equal to -10°C, or more specifically -40° to -80°C, and (ii) a rigid polymeric superstrate grafted to the elastomeric polymer substrate. As is known, elastomer-modified graft copolymers can be prepared by first providing the elastomeric polymer, then polymerizing the constituent monomer(s) of the rigid phase in the presence of the elastomer to obtain the graft copolymer. The grafts can be attached as graft branches or as shells to an elastomer core. The shell can merely physically encapsulate the core, or the shell can be partially or essentially completely grafted to the core.

Materials for use as the elastomer phase include, for example, conjugated diene rubbers; copolymers of a conjugated diene with less than or equal to 50 wt% of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers.

Conjugated diene monomers for preparing the elastomer phase include those of formula (21) 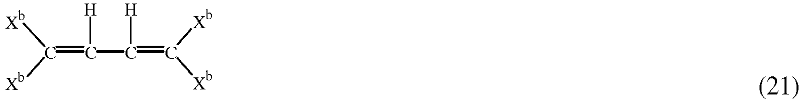 wherein each X^{b} is independently hydrogen, C₁-C₅ alkyl, or the like. Examples of conjugated diene monomers that can be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as combinations comprising at least one of the foregoing conjugated diene monomers. Specific conjugated diene homopolymers include polybutadiene and polyisoprene.

Copolymers of a conjugated diene rubber can also be used, for example those produced by aqueous radical emulsion polymerization of a conjugated diene and at least one monomer copolymerizable therewith. Monomers that are useful for copolymerization with the conjugated diene include monovinylaromatic monomers containing condensed aromatic ring structures, such as vinyl naphthalene, vinyl anthracene, and the like, or monomers of formula (22) 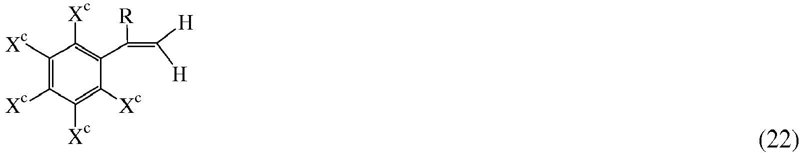 wherein each X^{c} is independently hydrogen, C₁-C₁₂ alkyl, C₃-C₁₂ cycloalkyl, C₆-C₁₂ aryl, C₇-C₁₂ aralkyl, C₇-C₁₂ alkylaryl, C₁-C₁₂ alkoxy, C₃-C₁₂ cycloalkoxy, C₆-C₁₂ aryloxy, chloro, bromo, or hydroxy, and R is hydrogen, C₁-C₅ alkyl, bromo, or chloro. monovinylaromatic monomers that can be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene can be used as monomers copolymerizable with the conjugated diene monomer.

Other monomers that can be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (23) 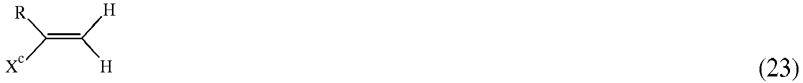 wherein R is hydrogen, C₁-C₅ alkyl, bromo, or chloro, and X^{c} is cyano, C₁-C₁₂ alkoxycarbonyl, C₁-C₁₂ aryloxycarbonyl, hydroxy carbonyl, or the like. Examples of monomers of formula (21a) include acrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the conjugated diene monomer. Combinations of the foregoing monovinyl monomers and monovinylaromatic monomers can also be used.

In an embodiment, the flame retardant composition comprises a rubber-modified polystyrene. The rubber-modified polystyrene comprises polystyrene and polybutadiene. Rubber-modified polystyrenes are sometimes referred to as "high-impact polystyrenes" or "HIPS". In some embodiments, the rubber-modified polystyrene comprises 80 to 96 weight percent polystyrene, specifically 88 to 94 weight percent polystyrene; and 4 to 20 weight percent polybutadiene, specifically 6 to 12 weight percent polybutadiene, based on the weight of the rubber-modified polystyrene. In some embodiments, the rubber-modified polystyrene has an effective gel content of 10 to 35 percent. Suitable rubber-modified polystyrenes are commercially available as, for example, HIPS3190 from SABIC.

The flame retardant composition comprises the rubber-modified polystyrene in an amount of 3 to 40 weight percent, specifically 5 to 30 weight percent, more specifically 7 to 35 weight percent, based on the total weight of the flame retardant composition.

(Meth)acrylate monomers for use in the elastomeric phase can be cross-linked, particulate emulsion homopolymers or copolymers of C₁₋₈ alkyl (meth)acrylates, in particular C₄₋₆ alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. The C₁₋₈ alkyl (meth)acrylate monomers can optionally be polymerized in admixture with less than or equal to 15 wt% of comonomers of formulas (21), (22), or (23), based on the total monomer weight. comonomers include but are not limited to butadiene, isoprene, styrene, methyl methacrylate, phenyl methacrylate, phenethylmethacrylate, N-cyclohexylacrylamide, vinyl methyl ether or acrylonitrile, and combinations comprising at least one of the foregoing comonomers. Optionally, less than or equal to 5 wt% of a polyfunctional crosslinking comonomer can be present, based on the total monomer weight. Such polyfunctional crosslinking comonomers can include, for example, divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomer phase can be polymerized by mass, emulsion, suspension, solution or combined processes such as bulk-suspension, emulsion-bulk, bulk-solution or other techniques, using continuous, semi-batch, or batch processes. The particle size of the elastomer substrate is not critical. For example, an average particle size of 0.001 to 25 micrometers, specifically 0.01 to 15 micrometers, or even more specifically 0.1 to 8 micrometers can be used for emulsion based polymerized rubber lattices. A particle size of 0.5 to 10 micrometers, specifically 0.6 to 1.5 micrometers can be used for bulk polymerized rubber substrates. Particle size can be measured by simple light transmission methods or capillary hydrodynamic chromatography (CHDF). The elastomer phase can be a particulate, moderately cross-linked conjugated butadiene or C₄₋₆ alkyl acrylate rubber, and specifically has a gel content greater than 70%. Also useful are combinations of butadiene with styrene and/or C₄₋₆ alkyl acrylate rubbers.

The elastomeric phase comprises 5 to 95 wt% of the total graft copolymer, more specifically 20 to 90 wt%, and even more specifically 40 to 85 wt% of the elastomer-modified graft copolymer, the remainder being the rigid graft phase.

The rigid phase of the elastomer-modified graft copolymer can be formed by graft polymerization of a combination comprising a monovinylaromatic monomer and optionally at least one comonomer in the presence of at least one elastomeric polymer substrates. The above-described monovinylaromatic monomers of formula (22) can be used in the rigid graft phase, including styrene, alpha-methyl styrene, halostyrenes such as dibromostyrene, vinyltoluene, vinylxylene, butylstyrene, para-hydroxystyrene, methoxystyrene, or the like, or combinations comprising at least one of the foregoing monovinylaromatic monomers. Useful comonomers include, for example, the above-described monovinylic monomers and/or monomers of the general formula (19). In an embodiment, R is hydrogen or C₁-C₂ alkyl, and X^{c} is cyano or C₁-C₁₂ alkoxycarbonyl. Comonomers for use in the rigid phase include acrylonitrile, methacrylonitrile, methyl (meth)acrylate, ethyl (meth)acrylate, n-propyl (meth)acrylate, isopropyl (meth)acrylate, and the like, and combinations comprising at least one of the foregoing comonomers.

The relative ratio of monovinylaromatic monomer and comonomer in the rigid graft phase can vary widely depending on the type of elastomer substrate, type of monovinylaromatic monomer(s), type of comonomer(s), and the desired properties of the impact modifier. The rigid phase can generally comprise less than or equal to 100 wt% of monovinyl aromatic monomer, specifically 30 to 100 wt%, more specifically 50 to 90 wt% monovinylaromatic monomer, with the balance of the rigid phase being comonomer(s).

Depending on the amount of elastomer-modified polymer present, a separate matrix or continuous phase of ungrafted rigid polymer or copolymer can be simultaneously obtained along with the elastomer-modified graft copolymer. Typically, such impact modifiers comprise 40 to 95 wt% elastomer-modified graft copolymer and 5 to 65 wt% graft copolymer, based on the total weight of the impact modifier. In another embodiment, such impact modifiers comprise 50 to 85 wt%, more specifically 75 to 85 wt% rubber-modified graft copolymer, together with 15 to 50 wt%, more specifically 15 to 25 wt% graft copolymer, based on the total weight of the impact modifier.

In an embodiment, the aromatic vinyl copolymer comprises "free" styrene-acrylonitrile copolymer (SAN), i.e., styrene-acrylonitrile copolymer that is not grafted onto another polymeric chain. In a particular embodiment, the free styrene-acrylonitrile copolymer can have a molecular weight of 50,000 to 200,000 Daltons on a polystyrene standard molecular weight scale and can comprise various proportions of styrene to acrylonitrile. For example, free SAN can comprise 75 weight percent styrene and 25 weight percent acrylonitrile based on the total weight of the free SAN copolymer. Free SAN can optionally be present by virtue of the addition of a grafted rubber impact modifier in the composition that contains free SAN, and/or free SAN can by present independent of other impact modifiers in the composition.

Another specific type of elastomer-modified impact modifier comprises structural units derived from at least one silicone rubber monomer, a branched acrylate rubber monomer having the formula H₂C=C(R^{d})C(O)OCH₂CH₂R^{e}, wherein R^{d} is hydrogen or a C₁-C₈ linear or branched alkyl group and R^{e} is a branched C₃-C₁₆ alkyl group; a first graft link monomer; a polymerizable alkenyl-containing organic material; and a second graft link monomer. The silicone rubber monomer can comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane, octamethylcyclotetrasiloxane and/or tetraethoxysilane.

Branched acrylate rubber monomers include iso-octyl acrylate, 6-methyloctyl acrylate, 7-methyloctyl acrylate, 6-methylheptyl acrylate, and the like, or a combination comprising at least one of the foregoing. The polymerizable alkenyl-containing organic material can be, for example, a monomer of formula (22) or (23), e.g., styrene, alpha-methylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, or the like, alone or in combination.

The first graft link monomer can be an (acryloxy)alkoxysilane, a (mercaptoalkyl)alkoxysilane, a vinylalkoxysilane, or an allylalkoxysilane, alone or in combination, e.g., (gamma-methacryloxypropyl)(dimethoxy)methylsilane and/or (3-mercaptopropyl)trimethoxysilane. The second graft link monomer is a polyethylenically unsaturated compound having at least one allyl group, such as allyl methacrylate, triallyl cyanurate, triallyl isocyanurate, and the like, or a combination comprising at least one of the foregoing.

The silicone-acrylate impact modifiers can be prepared by emulsion polymerization, wherein, for example a silicone rubber monomer is reacted with a first graft link monomer at a temperature from 30 to 110°C to form a silicone rubber latex, in the presence of a surfactant such as dodecylbenzenesulfonic acid. Alternatively, a cyclic siloxane such as cyclooctamethyltetrasiloxane and a tetraethoxyorthosilicate can be reacted with a first graft link monomer such as (gamma-methacryloxypropyl)methyldimethoxysilane. A branched acrylate rubber monomer is then polymerized with the silicone rubber particles, optionally in presence of a cross linking monomer, such as allyl methacrylate, in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid can be separated from the aqueous phase through coagulation (by treatment with a coagulant) and dried to a fine powder to produce the silicone-acrylate rubber impact modifier. This method can be generally used for producing the silicone-acrylate impact modifier having a particle size of 100 nanometers to 2 micrometers.

Processes known for the formation of the foregoing elastomer-modified graft copolymers include mass, emulsion, suspension, and solution processes, or combined processes such as bulk-suspension, emulsion-bulk, bulk-solution or other techniques, using continuous, semi-batch, or batch processes.

In an embodiment the foregoing types of impact modifiers are prepared by an emulsion polymerization process that is free of basic materials such as alkali metal salts of C₆₋₃₀ fatty acids, for example sodium stearate, lithium stearate, sodium oleate, potassium oleate, and the like, alkali metal carbonates, amines such as dodecyl dimethyl amine, dodecyl amine, and the like, and ammonium salts of amines. Such materials are commonly used as surfactants in emulsion polymerization, and can catalyze transesterification and/or degradation of polycarbonates. Instead, ionic sulfate, sulfonate or phosphate surfactants can be used in preparing the impact modifiers, particularly the elastomeric substrate portion of the impact modifiers. Useful surfactants include, for example, C₁₋₂₂ alkyl or C₇₋₂₅ alkylaryl sulfonates, C₁₋₂₂ alkyl or C₇₋₂₅ alkylaryl sulfates, C₁₋₂₂ alkyl or C₇₋₂₅ alkylaryl phosphates, substituted silicates, or a combination comprising at least one of the foregoing. A specific surfactant is a C₆₋₁₆, specifically a C₈₋₁₂ alkyl sulfonate. This emulsion polymerization process is described and disclosed in various patents and literature of such companies as Rohm & Haas and General Electric Company. In the practice, any of the above-described impact modifiers can be used providing it is free of the alkali metal salts of fatty acids, alkali metal carbonates and other basic materials.

A specific impact modifier of this type is a methyl methacrylate-butadiene-styrene (MBS) impact modifier wherein the butadiene substrate is prepared using above-described sulfonates, sulfates, or phosphates as surfactants. Other examples of elastomer-modified graft copolymers in addition to ABS and MBS include but are not limited to acrylonitrile-styrene-butyl acrylate (ASA), methyl methacrylate-acrylonitrile-butadiene-styrene (MABS), and acrylonitrile-ethylene-propylene-diene-styrene (AES). When present, impact modifiers can be present in the flame retardant composition in amounts of 5 to 30 percent by weight, based on the total weight of the flame retardant composition.

In an embodiment, the flame retardant composition may contain reinforcing fillers. Examples of reinforcing fillers are glass fibers, carbon fibers, metal fibers, and the like.

The glass fibers may be flat or round fibers. Flat glass fibers have an elliptical cross-sectional area, while round fibers have a circular cross-sectional area, where the cross-sectional areas are measured perpendicular to the longitudinal axis of the fiber. The glass fibers may be manufactured from "E-glass," "A-glass," "C-glass," "D-glass," "R-glass," "S-glass," as well as E-glass derivatives that are fluorine-free and/or boron-free. The glass fibers may be woven or non-woven. The glass fibers can have a diameter of 3 micrometers to 25 micrometers, specifically 4 micrometers to 20 micrometers, and more specifically 8 micrometers to 15 micrometers.

The carbon fibers may be either carbon nanotubes or carbon fibers derived from pitch or polyacrylonitrile. The carbon nanotubes can be single wall carbon nanotubes or multiwall carbon nanotubes. The carbon nanotubes can have diameters of 2.7 nanometers to 100 nanometers and can have aspect ratios of 5 to 100. The aspect ratio is defined as the ratio of the length to the diameter.

The carbon fibers derived from pitch and polyacrylonitrile have a different microstructure from the carbon nanotubes. The carbon fibers can have a diameter of 3 micrometers to 25 micrometers, specifically 4 micrometers to 20 micrometers, and more specifically 8 micrometers to 15 micrometers and can have aspect ratios of 0.5 to 100.

The metal fibers can be whiskers (having diameters of less than 100 nanometers) or can have diameters in the micrometer regime. Metal fibers in the micrometer regime can have diameters of 3 to 30 micrometers. Exemplary metal fibers comprise stainless steel, aluminum, iron, nickel, copper, or the like, or a combination comprising at least one of the foregoing metals.

The flame retardant composition comprises the reinforcing fibers in an amount of 15 to 45 wt%, specifically 20 to 40 wt%, and more specifically 28 to 33 wt%, based on the total weight of the flame retardant composition.

The flame retardant composition may also comprise mineral fillers. In an embodiment, the mineral fillers serve as synergists. The synergist facilitates an improvement in the flame retardant properties when added to the flame retardant composition over a comparative composition that contains all of the same ingredients in the same quantities except for the synergist. Examples of mineral fillers are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers.

The mineral filler is present in amounts of 0.1 to 20 wt%, specifically 0.5 to 15 wt%, and more specifically 1 to 5 wt%, based on the total weight of the flame retardant composition. An exemplary mineral filler is talc.

The flame retardant composition may also optionally contain additives such as antioxidants, antiozonants, stabilizers, thermal stabilizers, mold release agents, dyes, colorants, pigments, flow modifiers, or the like, or a combination comprising at least one of the foregoing additives.

As noted above, the flame retardant composition comprises a flame retarding agent. The flame retarding agent is a phosphazene compound. In an embodiment, the flame retarding agent is a phenoxyphosphazene oligomer.

The phosphazene compound used in the flame retardant composition is an organic compound having a -P=N- bond in the molecule. In an embodiment, the phosphazene compound comprises at least one species of the compound selected from the group consisting of a cyclic phenoxyphosphazene represented by the formula (24) below; a chainlike phenoxyphosphazene represented by the formula (25) below; and a crosslinked phenoxyphosphazene compound obtained by crosslinking at least one species of phenoxyphosphazene selected from those represented by the formulae (24) and (25) below, with a crosslinking group represented by the formula (26) below: 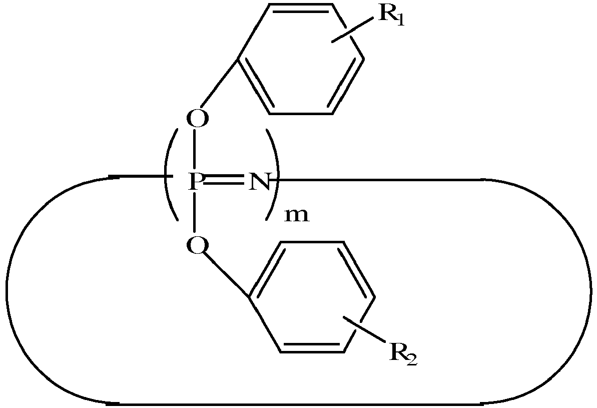 (24) where in the formula (24), m represents an integer of 3 to 25, R₁ and R₂ are the same or different and are independently a hydrogen, a halogen, a C₁₋₁₂ alkoxy, or a C₁₋₁₂ alkyl. A commercially available phenoxyphosphazene having the structure of formula (24) is FP-110^{®} manufactured and distributed by Fushimi Pharmaceutical Co., Ltd.

The chainlike phenoxyphosphazene represented by the formula (25) below: 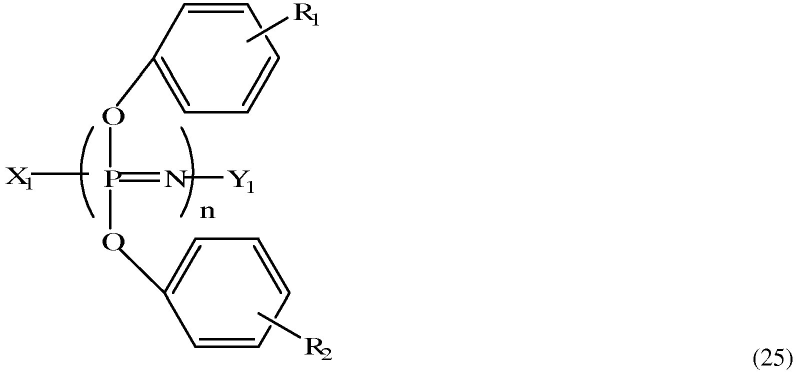 where in the formula (25), X¹ represents a -N=P(OPh)₃ group or a -N=P(O)OPh group, Y¹ represents a -P(OPh)₄ group or a -P(O) (OPh)₂ group, n represents an integer from 3 to 10000, Ph represents a phenyl group, R1 and R2 are the same or different and are independently a hydrogen, a halogen, a C₁₋₁₂ alkoxy, or a C₁₋₁₂ alkyl. A commercially available phenoxyphosphazene having the structure of formula (25) is SPB-100^{®} manufactured and distributed by Otsuka Chemical Co., Ltd.

The phenoxyphosphazenes may also have a crosslinking group represented by the formula (26) below: 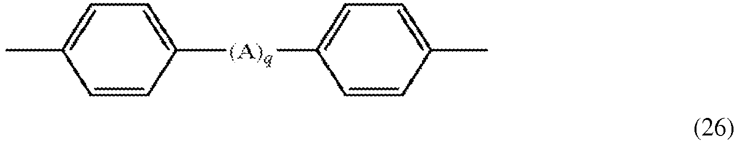 where in the formula (26), A represents -C(CH3)₂-, -SO₂-, -S-, or -O-, and q is 0 or 1.

In an embodiment, the phenoxyphosphazene compound has a structure represented by the formula (27) 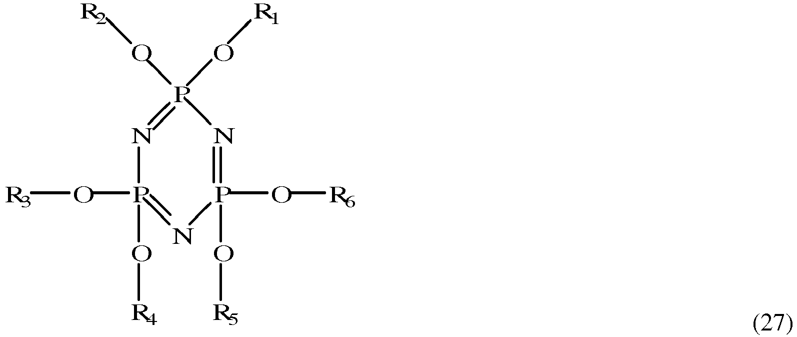 where R1 to R6 can be the same of different and can be an aryl group, a fused aryl group, an aralkyl group, a C₁₋₁₂ alkoxy, a C₁₋₁₂ alkyl, or a combination thereof.

In an embodiment, the phenoxyphosphazene compound has a structure represented by the formula (28)

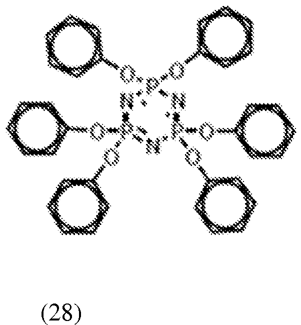

A commercially available phenoxyphosphazene having the structure of formula (28) is LY202^{®} manufactured and distributed by Lanyin Chemical Co., Ltd. [0131] The cyclic phenoxyphosphazene compound represented by the formula (11) may be exemplified by compounds such as phenoxy cyclotriphosphazene, octaphenoxy cyclotetraphosphazene, and decaphenoxy cyclopentaphosphazene, obtained by allowing ammonium chloride and phosphorus pentachloride to react at 120 to 130°C to obtain a mixture containing cyclic and straight chain chlorophosphazenes, extracting cyclic chlorophosphazenes such as hexachloro cyclotriphosphazene, octachloro cyclotetraphosphazene, and decachloro cyclopentaphosphazene, and then substituting it with a phenoxy group. The cyclic phenoxyphosphazene compound may be a compound in which m in the formula (11) represents an integer of 3 to 8.

The chainlike phenoxyphosphazene compound represented by the formula (25) is exemplified by a compound obtained by subjecting hexachloro cyclotriphosphazene, obtained by the above-described method, to ring-opening polymerization at 220 to 250°C, and then substituting thus obtained chainlike dichlorophosphazene having a degree of polymerization of 3 to 10000 with phenoxy groups. The chain-like phenoxyphosphazene compound has a value of n in the formula (25) of 3 to 1000, specifically 5 to 100, and more specifically 6 to 25.

The crosslinked phenoxyphosphazene compound may be exemplified by compounds having a crosslinked structure of a 4,4'-diphenylene group, such as a compound having a crosslinked structure of a 4,4'-sulfonyldiphenylene (bisphenol S residue), a compound having a crosslinked structure of a 2,2-(4,4'-diphenylene) isopropylidene group, a compound having a crosslinked structure of a 4,4'-oxydiphenylene group, and a compound having a crosslinked structure of a 4,4'-thiodiphenylene group. The phenylene group content of the crosslinked phenoxyphosphazene compound is generally 50 to 99.9 wt%, and specifically 70 to 90 wt%, based on the total number of phenyl group and phenylene group contained in the cyclic phosphazene compound represented by the formula (24) and/or the chainlike phenoxyphosphazene compound represented by the formula (25). The crosslinked phenoxyphosphazene compound may be particularly preferable if it doesn't have any free hydroxyl groups in the molecule thereof. In an exemplary embodiment, the phosphazene compound comprises the cyclic phosphazene.

It is desirable for the flame retardant composition to comprise the phosphazene compound in an amount of 1 to 20 wt%, specifically 2 to 16 wt%, and more specifically 2.5 wt% to 14 wt%, based on the total weight of the flame retardant composition.

In an embodiment, the flame retardant composition may comprise an anti-drip agent. Fluorinated polyolefin and/or polytetrafluoroethylene may be used as an anti-drip agent. Anti-drip agents may also be used, for example a fibril forming or non-fibril forming fluoropolymer such as polytetrafluoroethylene (PTFE). The anti-drip agent may be encapsulated by a rigid copolymer such as, for example styrene acrylonitrile (SAN). PTFE encapsulated in SAN is known as TSAN. Encapsulated fluoropolymers may be made by polymerizing the encapsulating polymer in the presence of the fluoropolymer, for example, in an aqueous dispersion. TSAN may provide significant advantages over PTFE, in that TSAN may be more readily dispersed in the composition. A suitable TSAN may comprise, for example, 50 wt % PTFE and 50 wt % SAN, based on the total weight of the encapsulated fluoropolymer. The SAN may comprise, for example, 75 wt % styrene and 25 wt % acrylonitrile based on the total weight of the copolymer. Alternatively, the fluoropolymer may be pre-blended in some manner with a second polymer, such as for, example, an aromatic polycarbonate resin or SAN to form an agglomerated material for use as an anti-drip agent. Either method may be used to produce an encapsulated fluoropolymer.

The anti-drip agent may be added in the form of relatively large particles having a number average particle size of 0.3 to 0.7 mm, specifically 0.4 to 0.6 millimeters. The anti-drip agent may be used in amounts of 0.01 wt% to 5.0 wt%, based on the total weight of the flame retardant composition.

The flame retardant composition may also comprise mineral fillers. In an embodiment, the mineral fillers serve as synergists. In an embodiment, a small portion of the mineral filler may be added to the flame retardant composition in addition to a synergist, which can be another mineral filler. The synergist facilitates an improvement in the flame retardant properties when added to the flame retardant composition over a comparative composition that contains all of the same ingredients in the same quantities except for the synergist. Examples of mineral fillers are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers.

Other additives such as anti-oxidants, anti-ozonants, mold release agents, thermal stabilizers, levelers, viscosity modifying agents, free-radical quenching agents, other polymers or copolymers such as impact modifiers, or the like.

The preparation of the flame-retardant composition can be achieved by blending the ingredients under conditions that produce an intimate blend. All of the ingredients can be added initially to the processing system, or else certain additives can be pre-compounded with one or more of the primary components.

In an embodiment, the flame-retardant composition is manufactured by blending the polycarbonate copolymer with the phosphazene compound. The blending can be dry blending, melt blending, solution blending or a combination comprising at least one of the foregoing forms of blending.

In an embodiment, the flame-retardant composition can be dry blended to form a mixture in a device such as a Henschel mixer or a Waring blender prior to being fed to an extruder, where the mixture is melt blended. In another embodiment, a portion of the polycarbonate copolymer can be premixed with the phosphazene compound to form a dry preblend. The dry preblend is then melt blended with the remainder of the polyamide composition in an extruder. In an embodiment, some of the flame retardant composition can be fed initially at the mouth of the extruder while the remaining portion of the flame retardant composition is fed through a port downstream of the mouth.

Blending of the flame retardant composition involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or combinations comprising at least one of the foregoing.

Blending involving the aforementioned forces may be conducted in machines such as single or multiple screw extruders, Buss kneader, Henschel, helicones, Ross mixer, Banbury, roll mills, molding machines such as injection molding machines, vacuum forming machines, blow molding machine, or then like, or combinations comprising at least one of the foregoing machines.

The flame-retardant composition can be introduced into the melt blending device in the form of a masterbatch. In such a process, the masterbatch may be introduced into the blending device (e.g., an extruder) downstream of the point where the remainder of the flame retardant composition is introduced.

In an embodiment, the flame-retardant composition disclosed herein are used to prepare molded articles such as for example, durable articles, electrical and electronic components, automotive parts, and the like. The compositions can be converted to articles using common thermoplastic processes such as film and sheet extrusion, injection molding, gas-assisted injection molding, extrusion molding, compression molding and blow molding.

The compositions were tested for one or more of the following: UL 94 flame retardance, Izod impact strength, melt viscosity, and heat deflection temperature. The details of these tests used in the examples are known to those of ordinary skill in the art, and may be summarized as follows:
Flammability tests were performed following the procedure of Underwriter's Laboratory Bulletin 94 entitled "Tests for Flammability of Plastic Materials, UL 94". Several ratings can be applied based on the rate of burning, time to extinguish, ability to resist dripping, and whether or not drips are burning. Samples for testing are bars having dimensions of 125 mm length×13 mm width by no greater than 13 mm thickness. Bar thicknesses were 0.6 mm or 0.8 mm. Materials can be classified according to this procedure as UL 94 HB (horizontal burn), V0, V1, V2, 5VA and/or 5VB on the basis of the test results obtained for five samples; however, the compositions herein were tested and classified only as V0, V1, and V2, the criteria for each of which are described below.

V0: In a sample placed so that its long axis is 180 degrees to the flame, the period of flaming and/or smoldering after removing the igniting flame does not exceed ten (10) seconds and the vertically placed sample produces no drips of burning particles that ignite absorbent cotton. Five bar flame out time is the flame out time for five bars, each lit twice, in which the sum of time to flame out for the first (t₁) and second (t₂) ignitions is less than or equal to a maximum flame out time (t₁+t₂) of 50 seconds.

V1: In a sample placed so that its long axis is 180 degrees to the flame, the period of flaming and/or smoldering after removing the igniting flame does not exceed thirty (30) seconds and the vertically placed sample produces no drips of burning particles that ignite absorbent cotton. Five bar flame out time is the flame out time for five bars, each lit twice, in which the sum of time to flame out for the first (t₁) and second (t₂) ignitions is less than or equal to a maximum flame out time (t₁+t₂) of 250 seconds.

V2: In a sample placed so that its long axis is 180 degrees to the flame, the average period of flaming and/or smoldering after removing the igniting flame does not exceed thirty (30) seconds, but the vertically placed samples produce drips of burning particles that ignite cotton. Five bar flame out time is the flame out time for five bars, each lit twice, in which the sum of time to flame out for the first (t₁) and second (t₂) ignitions is less than or equal to a maximum flame out time (t₁+t₂) of 250 seconds.

In an embodiment, the flame retardant compositions are of particular utility in the manufacture flame retardant articles that pass the UL94 vertical burn tests, in particular the UL94 5VB standard. In the UL94 vertical burn test, a flame is applied to a vertically fastened test specimen placed above a cotton wool pad. To achieve a rating of 5VB, burning must stop within 60 seconds after five applications of a flame to a test bar, and there can be no drips that ignite the pad. Various embodiments of the compositions described herein meet the UL94 5VB standard.

Izod Impact Strength is used to compare the impact resistances of plastic materials. Notched Izod impact strength was determined at both 23°C and 0°C using a 3.2-mm thick, molded, notched Izod impact bar. It was determined per ASTM D256. The results are reported in Joules/meter.

Heat deflection temperature (HDT) is a relative measure of a material's ability to perform for a short time at elevated temperatures while supporting a load. The test measures the effect of temperature on stiffness: a standard test specimen is given a defined surface stress and the temperature is raised at a uniform rate. HDT was determined as flatwise under 1.82 MPa loading with 3.2 mm thickness bar according to ASTM D648. Results are reported in °C.

The flame retardant composition is exemplified by the following examples.

### Example 1

This example was conducted to demonstrate the manufacturing of a flame retardant composition that comprises polycarbonate and a polyester. The polycarbonate is blended with the polyester in an extruder. The flame retardant is a phenoxyphosphazene. Two different phenoxyphosphazenes were separately used in the various flame retardant compositions. The ingredients used in the Example 1 are shown in the Table 1. The suppliers of some of the ingredients are also shown in the Table 1.

**Table 1**

| Acronym/Name | Chemical Name (Use) | Trade Name, Source |
|---|---|---|
| PC | Polycarbonate derived from bisphenol A (29.9K Mw) | Sabic |
| PBT | Poly (1,4-butylene terephthalate) with an intrinsic viscosity of 1.1 dl/g | Sabic |
| PET | Polyethylene terephthalate with an intrinsic viscosity of 0.80-0.86 dl/g | Foshan BG-03-80 |
| PETG | Polyethylene terephthalate glycol | SK Co. Ltd |
| Polysiloxane-carbonate copolymer | Polysiloxane-polycarbonate copolymer with 20 wt% polysiloxane and with PCP endcapping | Sabic |
| MBS | Methyl methacrylate-butadiene-styrene copolymer | EXL2650A |
| ABS | Poly (acrylonitrile-butadiene-styrene) high rubber grafted copolymer | Kumho ABS HR 181 |
| Phosphazene-1 | Phenoxyphosphazene oligomer | Fushimi Rabitle FP-110 |
| Phosphazene-2 | Phenoxyphosphazene oligomer | Otsuka SPB-100 |
| BPADP | BPA Diphosphate | Daihachi Co. Ltd CR741 |
| PX200 | Oligomeric Aromatic Phosphate | Daihachi Co. Ltd PX200 |
| TSAN | Poly(tetrafluoroethylene):styrene-acrylonitrile 50:50 | Sabic |
| Antioxidant | Tetrakis(methylene(3,5di-tert-butyl-4-hydroxy-hydrocinnamate)methane | Antioxidant 1010 |
| Quencher | Mono Zinc Phosphate | Budenheim Iberica Z21-82 |
| Anti-UV | 2-(2'-hydroxy-5-t-octylphenyl)-benzotriazole | CYASORB UV 5411 |

Tables 2 and 3 reflect the processing conditions used to manufacture the flame retardant catalyst. The compounding was conducted on a Toshiba SE37 mm twin-screw extruder having 11 barrels. The temperature for each of the barrels is detailed in the Table 2. The molding conditions are detailed in the Table 3.

**Table 2**

| Parameters | Unit of Measure | Settings |
|---|---|---|
| Compounder Type | none | Toshiba TEM-37BS |
| Barrel Size | mm | 1500 |
| Die | mm | 3 |
| Zone 1 Temp | °C | 50 |
| Zone 2 Temp | °C | 100 |
| Zone 3 Temp | °C | 238 |
| Zone 4 Temp | °C | 238 |
| Zone 5 Temp | °C | 242 |
| Zone 6 Temp | °C | 242 |
| Zone 7 Temp | °C | 242 |
| Zone 8 Temp | °C | 242 |
| Zone 9 Temp | °C | 252 |
| Zone 10 Temp | °C | 252 |
| Zone 11 Temp | °C | 252 |
| Die Temp | °C | 250 |
| Screw speed | rpm | 380 |
| Throughput | kg/hr | 50 |
| Vacuum | MPa | -0.08 |
| Side Feeder speed | rpm | 250 |

The polycarbonate, polyester, and the impact modifier were fed from main throat from upper stream. All additives (mold release agent, antioxidants, and the like) were pre-blended with the polycarbonate powder in a super blender and then fed into the extruder. The molding conditions are detailed in the Table 3.

**Table 3**

| Parameter | Unit of Measure | Settings |
|---|---|---|
| Pre-drying time | Hour | 4 |
| Pre-drying temp | °C | 120 |
| Hopper temp | °C | 70 |
| Zone 1 temp | °C | 230 |
| Zone 2 temp | °C | 240 |
| Zone 3 temp | °C | 250 |
| Nozzle temp | °C | 250 |
| Mold temp | °C | 80 |
| Screw speed | rpm | 80 |
| Back pressure | kgf/cm² | 30 |
| Cooling time | s | 15 |
| Molding Machine | none | FANUC |
| Shot volume | mm | 45 |
| Injection speed(mm/s) | mm/s | 40 |
| Holding pressure | kgf/cm² | 800 |
| Max. Injection pressure | kgf/cm² | 1200 |

The properties along with the standard used to measure them are detailed in the Table 4. The compositions along with the properties are shown in the Table 5. The compositions were all compounded from twin-screw extruder, and the pellets were collected for evaluation and molding. In the Table 5, Sample #s 1 - 5 are the disclosed flame retardant compositions, while Sample #s 6 - 12 are comparative examples. In the Table 5, it may be seen that Sample #s 1 - 5 contain polycarbonate, polyester, the polysiloxane-polycarbonate copolymer, and a phenoxyphosphazene flame retardant. Sample #s 6, 7 and 8 contain comparative flame retardants BPADP (Sample 3 6) and PX200 (Sample #s 7 and 8) respectively. Sample #s 9 and 10 do not contain any polysiloxane-polycarbonate copolymer. Samples 11 and 12 contain increased amounts of the phosphazene flame retardant and the polysiloxane-polycarbonate copolymer respectively. Detailed compositions along with the properties may be seen in the Table 5.

**Table 4**

| Property | Standard | Conditions | Specimen Type | Units |
|---|---|---|---|---|
| MFR | ASTM D1238 | 265°C/5 kg | Granule | g/10 mins |
| Notched Izod | ASTM D-256 | 23 °C, 3.2 mm | Bar - 63.5 x 12.7 x 3.2 mm | J/m |
| Notched Izod | ASTM D-256 | 0°C, 3.2 mm | Bar - 63.5 x 12.7 x 3.2 mm | J/m |
| HDT | ASTM D648 | 1.82 MPa / 3.2 mm | Bar - 127 x 12.7 x 3.2 mm | °C |
| Vicat | ASTM 1525 | 50 N-120°C/hour | Bar - 63.5 x 12.7 x 3.2 mm | °C |
| UL | UL 94 | 1.50 mm thickness | Bar - 127 x 12.7 x 1.50 mm | V0, V1, V2 |
| UL | UL 94 | 1.20 mm thickness | Bar - 127 x 12.7 x 1.20 mm | V0, V1, V2 |

**Table 5**

| Component/Sample # | 1 | 2 | 3 | 4 | 5 | 6* | 7* | 8* | 9* | 10* | 11* | 12* |
|---|---|---|---|---|---|---|---|---|---|---|---|---|
| PC | 44.63 | 44.63 | 44.63 | 44.63 | 34.63 | 44.63 | 44.63 | 44.63 | 65.63 | 64.63 | 13.63 | 29.63 |
| PBT | 20 | 20 | | | 25 | 20 | 20 | | 20 | 20 | 40 | 20 |
| PET | | | 20 | | | | | 20 | | | | |
| PETG | | | | 20 | | | | | | | | |
| Polysiloxane-carbonate copolymer | 25 | 25 | 25 | 25 | 30 | 25 | 25 | 25 | | | 30 | 40 |
| MBS | | | | | | | | | 4 | | | |
| ABS | | | | | | | | | | 5 | | |
| Phosphazene-1 | 9 | | 9 | 9 | 9 | | | | 9 | 9 | 15 | |
| Phosphazene-2 | | 9 | | | | | | | | | | |
| BPADP | | | | | | 9 | | | | | | |
| PX200 | | | | | | | 9 | 9 | | | | 9 |
| TSAN | 0.8 | 0.8 | 0.8 | 0.8 | 0.8 | 0.8 | 0.8 | 0.8 | 0.8 | 0.8 | 0.8 | 0.8 |

| **Properties** | | | | | | | | | | | | |
|---|---|---|---|---|---|---|---|---|---|---|---|---|
| MFR@265°C, 5Kg, (g/10min) | 23.9 | 25.7 | 35.4 | 31.2 | 26.6 | 28.0 | 27.6 | 36.9 | 25.6 | 24.7 | 49.4 | 25.8 |
| HDT 1.82 MPa, 3.2 mm (°C) | 87.3 | 86.3 | 91.5 | 89.0 | 85.5 | 79.9 | 78.8 | 86.1 | 89.3 | 88.6 | 63.7 | 77.5 |
| Vicat Soften Temp B/120°C | 112 | 110 | 116 | 106 | 109 | 103 | 102 | 107 | 113 | 110 | 89 | 100 |
| INI@ 23°C (J/m) | 802 | 804 | 813 | 792 | 676 | 120 | 88.5 | 88.1 | 843 | 853 | 76.6 | 451 |
| INI@ 0°C (J/m) | 629 | 622 | 520 | 695 | 559 | 86.6 | 89.3 | 87.3 | 695 | 769 | 58.7 | 346 |
| VX-1.5 mm FOT, 5 bars, s | 21.7 | 18.1 | 17.3 | 12.0 | 29.2 | 46.9 | 43.1 | 21.7 | Fail | Fail | 95.1 | 40.2 |
| VX-1.5 mm-aged FOT, 5 bars, s | 35.2 | 21.7 | 27.3 | 12.4 | 23.1 | 72.0 | 35.9 | 28.2 | Fail | Fail | 96.7 | 38.6 |
| VX-1.5 mm- UL Rating | V0 | V0 | V0 | V0 | V0 | V1 | V0 | V0 | No | No | V1 | V0 |
| VX-1.2 mm FOT, 5 bars, s | 34.0 | 49.0 | 25.0 | 19.7 | 27.5 | 169.2 | 43.5 | 27.7 | Fail | Fail | 125.3 | 41.3 |
| VX-1.2 mm-aged FOT, 5 bars, s | 45.0 | 32.0 | 30.5 | 14.5 | 21.6 | 91.0 | 51.2 | 30.7 | Fail | Fail | 78.4 | 54.5 |
| VX-1.2 mm- UL Rating | V0 | V0 | V0 | V0 | V0 | V1 | V1 | V0 | No | No | V1 | V1 |
| Delamination | No | No | No | No | No | No | No | No | No | No | No | Yes |

| | | | | | | | | | | | | |
|---|---|---|---|---|---|---|---|---|---|---|---|---|
| *Comparative sample | | | | | | | | | | | | |

From the Table 5, it can be seen that for the Sample #'s 1 - 5, a combination of the phosphazene flame retardant and the polysiloxane-polycarbonate copolymer provides the polycarbonate/polyester blend with a good flame retardant performance (V-0 at 1.2 mm) as well as impact strength (notched Izod of greater than 500 J/m) at both room temperature and at low temperatures. In addition, the heat resistance of the molded part is also improved when compared with the phosphate flame retardants (BPADP and PX200) based formulations (Sample #'s 6 - 8).

Such an balance of properties are also achieved for different kind of polyesters or their copolymers (Sample #s 2 - 4), while maintaining good melt flowability, which further improves the versatility of the composition to meet the requirement of different applications. For example, Sample #3 with polyethylene terephthalate (PET) as the high heat polyester component shows apparently higher heat distortion temperature (91.5°C) than Sample #1 with the PBT based formulation (87.3°C).

The excellent flame retardant/mechanical property balance of the molded parts can be achieved with the combination of the polysiloxane-polycarbonate copolymer and phosphazene, as indicated from the comparative samples in Table 5. If the polysiloxane-polycarbonate is replaced by traditional impact modifiers such as MBS or ABS, the flame retardant performance is destroyed with no V-0 rating obtained (Sample #s 9 - 10). On the other hand, when phosphazene is replaced with common phosphate flame retardant additives such as BPADP or PX200, impact strength is completely lost although flame retardant performance is sometimes preserved (Sample #'s 6 - 8). This indicates that phosphazene flame retardant additive and the polysiloxane-polycarbonate copolymer have a synergistic effect. This synergistic effect permits a suitable property balance between impact resistance, the melt viscosity, and the flame retardancy of the flame retardant composition.

Moreover, loading level is also a very important factor in obtaining all the required properties. If polyester loading is higher than 30%, it will be very difficult to obtain a good property balance between flame retardancy and impact strength (Sample #11); while if the polysiloxane-carbonate loading exceeds 35%, delamination might occur (Sample #12).

From the Table 5, it may be seen that the flame retardant composition displays a melt flow rate of 20 to 40 cubic centimeters per 10 minutes, specifically 22 to 36 cubic centimeters per 10 minutes, when measured at 265°C under a force of 5 Kgf using ASTM D1238. The compositions display a heat distortion temperature of 80 to 95°C, specifically 82 to 93°C, when measured as per ASTM D648 using 1.82 MPa and a 3.2 millimeter thick sample.

In an embodiment, the flame retardant composition has a flame retardancy of V-0 at a thickness of less than or equal to 3.0 mm when measured as per a UL-94 protocol and a notched Izod impact strength of greater than or equal to 200 joules per meter, specifically greater than or equal to 300 joules per meter, and more specifically greater than or equal to 500 joules per meter, when measured as per ASTM D 256. In another embodiment, the flame retardant composition has a flame retardancy of V-0 at a thickness of greater than or equal to 1.2 mm when measured as per a UL-94 protocol and heat distortion temperature of greater than or equal to about 80°C, when measured as per ASTM D648 at 1.82 MPa for samples having a thickness of 3.2 millimeter.

In summary, the flame retardant composition comprising 10 to 75 weight percent of a polycarbonate; 10 to 30 weight percent of a polyester; where the polyester is poly(ethylene terephthalate), poly(1,4-butylene terephthalate), poly(propylene terephthalate), poly(alkylene naphthoates), poly(ethylene naphthanoate), poly(butylene naphthanoate), poly(cyclohexanedimethylene terephthalate), poly(cyclohexanedimethylene terephthalate)-co-poly(ethylene terephthalate), poly(1,4-cyclohexanedimethylene terephthalate), poly(alkylene cyclohexanedicarboxylate)s, poly(1,4-cyclohexane-dimethanol-1,4-cyclohexanedicarboxylate), or a combination comprising at least one of the foregoing polyesters. 10 to 35 weight percent of a polysiloxane-polycarbonate copolymer; and a phosphazene flame retardant, where the phosphazene flame retardant is phenoxy cyclotriphosphazene, octaphenoxy cyclotetraphosphazene, decaphenoxy cyclopentaphosphazene, or a combination comprising at least one of the foregoing phosphazene compounds; and specifically where the flame retardant composition has a flame retardancy of V-0 at a thickness of less than or equal to 3.0 mm when measured as per a UL-94 protocol and a notched Izod impact strength of greater than or equal to 200 joules per meter when measured as per ASTM D 256; a heat distortion temperature of greater than or equal to about 80°C, when measured as per ASTM D648 at 1.82 MPa for samples having a thickness of 3.2 millimeter; and where all weight percents are based on the total weight of the flame retardant composition.

In another embodiment, the flame retardant composition comprising 10 to 75 weight percent of a polycarbonate; 10 to 30 weight percent of a polyester; where the polyester is poly(ethylene terephthalate), poly(1,4-butylene terephthalate), poly(propylene terephthalate), poly(alkylene naphthoates), poly(ethylene naphthanoate), poly(butylene naphthanoate), poly(cyclohexanedimethylene terephthalate), poly(cyclohexanedimethylene terephthalate)-co-poly(ethylene terephthalate), poly(1,4-cyclohexanedimethylene terephthalate), poly(alkylene cyclohexanedicarboxylate)s, poly(1,4-cyclohexane-dimethanol-1,4-cyclohexanedicarboxylate), or a combination comprising at least one of the foregoing polyesters. 10 to 35 weight percent of a polysiloxane-polycarbonate copolymer; and a phosphazene flame retardant, where the polysiloxane-polycarbonate copolymer comprises 15 to 25 weight percent polysiloxane, based on the total weight of the polysiloxane-polycarbonate copolymer; where the phosphazene flame retardant is present in an amount of 1 to 20 wt%, based on a total weight of the flame retardant composition; where the phosphazene flame retardant is phenoxy cyclotriphosphazene, octaphenoxy cyclotetraphosphazene, decaphenoxy cyclopentaphosphazene, or a combination comprising at least one of the foregoing phosphazene compounds; and where the flame retardant composition has a flame retardancy of V-0 at a thickness of 1.2 millimeter or lower when measured as per a UL-94 protocol; and specifically where the flame retardant composition has a flame retardancy of V-0 at a thickness of less than or equal to 3.0 mm when measured as per a UL-94 protocol and a notched Izod impact strength of greater than or equal to 200 joules per meter when measured as per ASTM D 256; a heat distortion temperature of greater than or equal to about 80°C, when measured as per ASTM D648 at 1.82 MPa for samples having a thickness of 3.2 millimeter; and where all weight percents are based on the total weight of the flame retardant composition.

In yet another embodiment, the flame retardant composition comprising 10 to 75 weight percent of a polycarbonate; 10 to 30 weight percent of a polyester; where the polyester is poly(ethylene terephthalate), poly(1,4-butylene terephthalate), poly(propylene terephthalate), poly(alkylene naphthoates), poly(ethylene naphthanoate), poly(butylene naphthanoate), poly(cyclohexanedimethylene terephthalate), poly(cyclohexanedimethylene terephthalate)-co-poly(ethylene terephthalate), poly(1,4-cyclohexanedimethylene terephthalate), poly(alkylene cyclohexanedicarboxylate)s, poly(1,4-cyclohexane-dimethanol-1,4-cyclohexanedicarboxylate), or a combination comprising at least one of the foregoing polyesters. 10 to 35 weight percent of a polysiloxane-polycarbonate copolymer; and a phosphazene flame retardant, where the polysiloxane-polycarbonate copolymer comprises 15 to 25 weight percent polysiloxane, based on the total weight of the polysiloxane-polycarbonate copolymer; where the phosphazene flame retardant is present in an amount of 1 to 20 wt%, based on a total weight of the flame retardant composition; and where all weight percents are based on the total weight of the flame retardant composition, where the phosphazene flame retardant has the structure:

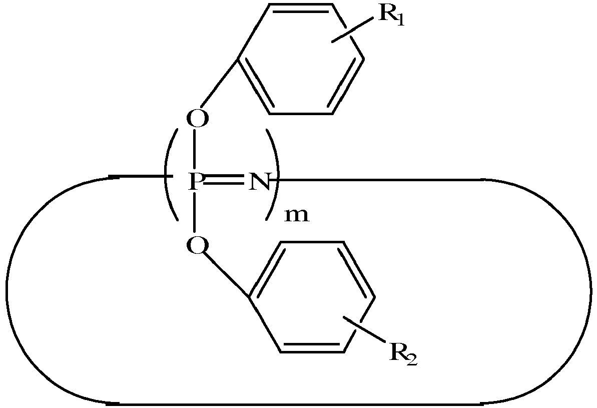

where in the formula (24), m represents an integer of 3 to 25, R₁ and R₂ are the same or different and are independently a hydrogen, a hydroxyl, a C_{7 - 30} aryl, a C₁₋₁₂ alkoxy, or a C₁₋₁₂ alky or.
where the phosphazene flame retardant has the structure: 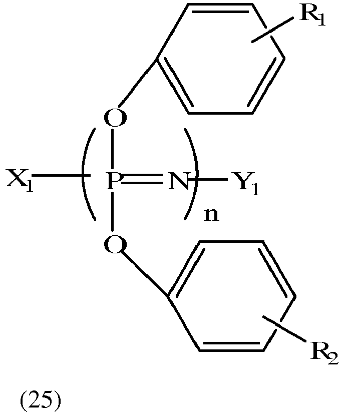 where in the formula (25), X¹ represents a -N=P(OPh)₃ group or a - N=P(O)OPh group, Y¹ represents a -P(OPh)₄ group or a -P(O) (OPh)₂ group, n represents an integer from 3 to 10000, Ph represents a phenyl group, R₁ and R₂ are the same or different and are independently a hydrogen, a hydroxyl, a C_{7 - 30} aryl, a C₁₋₁₂ alkoxy, or a C₁₋₁₂ alkyl; or where the phosphazene flame retardant is a crosslinked phosphazene; and where the flame retardant composition has a flame retardancy of V-0 at a thickness of 1.2 millimeter or lower when measured as per a UL-94 protocol; and specifically where the flame retardant composition has a flame retardancy of V-0 at a thickness of less than or equal to 3.0 mm when measured as per a UL-94 protocol and a notched Izod impact strength of greater than or equal to 200 joules per meter when measured as per ASTM D 256; and a heat distortion temperature of greater than or equal to about 80°C, when measured as per ASTM D648 at 1.82 MPa for samples having a thickness of 3.2 millimeter.

In one embodiment, a method of manufacturing a flame retardant composition comprises blending 10 to 75 weight percent of a polycarbonate; 10 to 30 weight percent of a polyester; 10 to 35 weight percent of a polysiloxane-polycarbonate copolymer; and a phosphazene flame retardant, where all weight percents are based on the total weight of the flame retardant composition.

In another embodiment, a method of manufacturing a flame retardant composition comprises blending 10 to 75 weight percent of a polycarbonate; 10 to 30 weight percent of a polyester; 10 to 35 weight percent of a polysiloxane-polycarbonate copolymer; and a phosphazene flame retardant, the blending is conducted in an extruder; where all weight percents are based on the total weight of the flame retardant composition.

In yet another embodiment, a method of manufacturing a flame retardant composition comprises blending 10 to 75 weight percent of a polycarbonate; 10 to 30 weight percent of a polyester; 10 to 35 weight percent of a polysiloxane-polycarbonate copolymer; and a phosphazene flame retardant, the blending is conducted in an extruder; and molding the flame retardant composition; where all weight percents are based on the total weight of the flame retardant composition.

In yet another embodiment, a method of manufacturing a flame retardant composition comprises blending an antidrip agent; 10 to 75 weight percent of a polycarbonate; 10 to 30 weight percent of a polyester; 10 to 35 weight percent of a polysiloxane-polycarbonate copolymer; and a phosphazene flame retardant, the blending is conducted in an extruder; and molding the flame retardant composition; where all weight percents are based on the total weight of the flame retardant composition.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A flame retardant composition comprising:
10 to 75 weight percent of a polycarbonate;
10 to 30 weight percent of a polyester;
10 to 35 weight percent of a polysiloxane-polycarbonate copolymer; and
a phosphazene flame retardant, where all weight percents are based on the total weight of the flame retardant composition.

2. The flame retardant composition of Claim 1, where the polyester is poly(ethylene terephthalate), poly(1,4-butylene terephthalate), poly(propylene terephthalate), poly(alkylene naphthalate)s, poly(ethylene naphthalate), poly(butylene naphthalate), poly(cyclohexanedimethylene terephthalate), poly(cyclohexanedimethylene terephthalate)-co-poly(ethylene terephthalate), poly(1,4-cyclohexanedimethylene terephthalate), poly(alkylene cyclohexanedicarboxylate)s, poly(1,4-cyclohexanedimethanol 1,4-cyclohexanedicarboxylate), or a combination comprising at least one of the foregoing polyesters.

3. The flame retardant composition of Claim 1, where the polysiloxane-polycarbonate copolymer comprises 15 to 25 weight percent polysiloxane, based on the total weight of the polysiloxane-polycarbonate copolymer.

4. The flame retardant composition of Claim 1, where the phosphazene flame retardant is present in an amount of 1 to 20 weight percent, based on a total weight of the flame retardant composition.

5. The flame retardant composition of Claim 1, where the phosphazene flame retardant has the structure of formula (24) 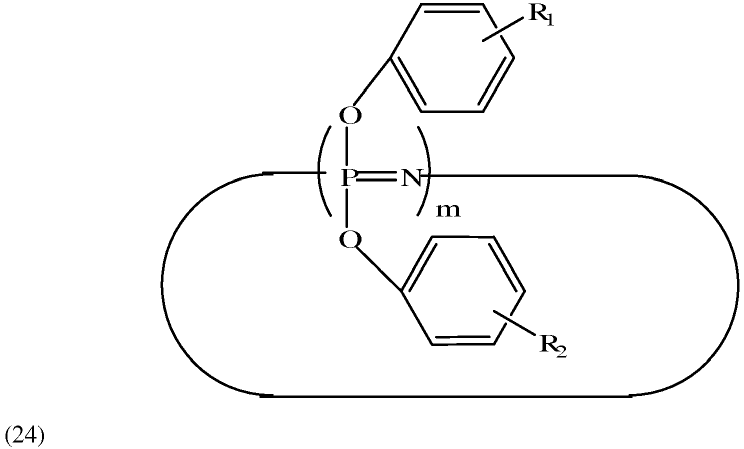 where in the formula (24), m represents an integer of 3 to 25, R₁ and R₂ are the same or different and are independently a hydrogen, a hydroxyl, a C_{7 - 30} aryl, a C₁₋₁₂ alkoxy, or a C₁₋₁₂ alkyl.

6. The flame retardant composition of Claim 1, where the phosphazene flame retardant is phenoxy cyclotriphosphazene, octaphenoxy cyclotetraphosphazene, decaphenoxy cyclopentaphosphazene, or a combination comprising at least one of the foregoing phosphazene compounds.

7. The flame retardant composition of Claim 1, where the phosphazene flame retardant has the structure of formula (25) 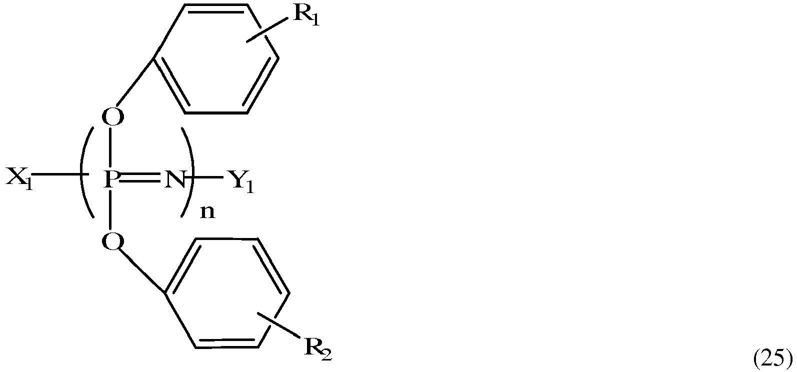 where in the formula (25), X¹ represents a -N=P(OPh)₃ group or a -N=P(O)OPh group, Y¹ represents a -P(OPh)₄ group or a -P(O) (OPh)₂ group, n represents an integer from 3 to 10000, Ph represents a phenyl group, R₁ and R₂ are the same or different and are independently a hydrogen, a hydroxyl, a C₇₋₃₀ aryl, a C₁₋₁₂ alkoxy, or a C₁₋₁₂ alkyl.

8. The flame retardant composition of any one of Claim 1, where the phosphazene flame retardant is a phenoxyphosphazene.

9. The flame retardant composition of Claim 1, further comprising an antidrip agent.

10. The flame retardant composition of any one of Claims 1 through 9, where the composition does not contain a flame retardant other than the phosphazene flame retardant.

11. The flame retardant composition of any one of Claims 1 through 10, where the flame retardant composition comprises 3 to 30 weight percent of an impact modifier, based on the total weight of the flame retardant composition.

12. A method of manufacturing a flame retardant composition comprising blending: 10 to 75 weight percent of a polycarbonate; 10 to 30 weight percent of a polyester; 10 to 35 weight percent of a polysiloxane-polycarbonate copolymer; and a phosphazene flame retardant, where all weight percents are based on the total weight of the flame retardant composition.

13. The method of Claim 12, further comprising blending an antidrip agent.

14. The method of any one of Claims 12 or 13, further comprising molding the flame retardant composition.

15. An article manufactured from the composition of Claim 1.

## Patentansprüche

1. Flammenwidrige Zusammensetzung umfassend:
10 bis 75 Gewichtsprozent eines Polycarbonats;
10 bis 30 Gewichtsprozent eines Polyesters;
10 bis 35 Gewichtsprozent eines Polysiloxan-Polycarbonat- Copolymers; und
ein Phosphazen-Flammschutzmittel, wobei alle Gewichtsprozentsätze auf dem Gesamtgewicht der flammenwidrigen Zusammensetzung basieren.

2. Flammenwidrige Zusammensetzung nach Anspruch 1, wobei der Polyester Poly(ethylenterephthalat), Poly(1,4-butylenterephthalat), Poly(propylenterephthalat), Poly(alkylennaphthalat), Poly(ethylennaphthalat), Poly(butylennaphthalat), Poly(cyclohexandimethylenterephthalat), Poly(cyclohexandimethylenterephthalat)-Copoly(ethylenterephthalat), Poly(1,4-cyclohexandimethylenterephthalat), Poly(alkylencyclohexandicarboxylat), Poly(1,4-cyclohexandimethanol-1,4-cyclohexandicarboxylat) oder eine Kombination ist, die mindestens einen der obigen Polyester umfasst.

3. Flammenwidrige Zusammensetzung nach Anspruch 1, wobei das Polysiloxan-Polycarbonat-Copolymer 15 bis 25 Gewichtsprozent Polysiloxan, auf das Gesamtgewicht des Polysiloxan-Polycarbonat-Copolymers bezogen, umfasst.

4. Flammenwidrige Zusammensetzung nach Anspruch 1, wobei das Phosphazen-Flammschutzmittel in einer Menge von 1 bis 20 Gewichtsprozent, auf das Gesamtgewicht der flammenwidrigen Zusammensetzung bezogen, vorliegt.

5. Flammenwidrige Zusammensetzung nach Anspruch 1, wobei das Phosphazen-Flammschutzmittel die Struktur der Formel (24) aufweist 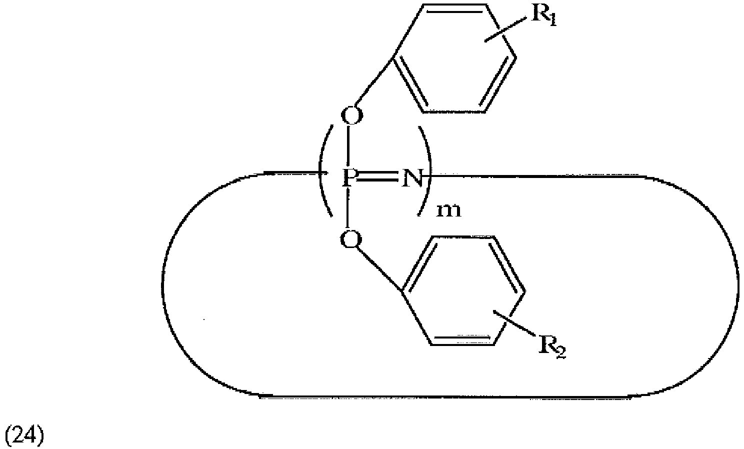 wobei in der Formel (24) m eine ganze Zahl von 3 bis 25 darstellt, R₁ und R₂ gleich oder verschieden und unabhängig ein Wasserstoff, ein Hydroxyl, ein C₇₋₃0-Aryl, ein C₁-₁₂-Alkoxy oder ein C₁-₁₂-Alkyl sind.

6. Flammenwidrige Zusammensetzung nach Anspruch 1, wobei das Phosphazen-Flammschutzmittel Phenoxycyclotriphosphazen, Octaphenoxycyclotetraphosphazen, Decaphenoxycyclopentaphosphazen oder eine Kombination ist, die mindestens eine der obigen Phosphazenverbindungen umfasst.

7. Flammenwidrige Zusammensetzung nach Anspruch 1, wobei das Phosphazen-Flammschutzmittel die Struktur der Formel (25) aufweist 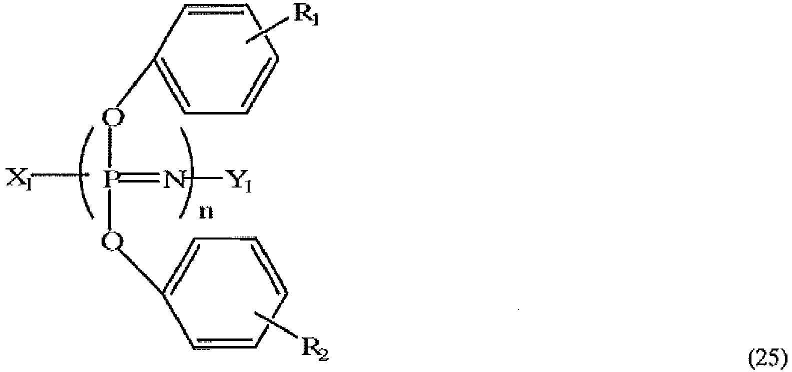 wobei in der Formel (25) X¹ eine -N=P(OPh)₃-Gruppe oder eine -N=P(O)OPh)-Gruppe darstellt, Y¹ eine - P(OPh)₄-Gruppe oder eine -P(O)(OPh)₂-Gruppe darstellt, n eine ganze Zahl von 3 bis 1000 darstellt, Ph eine Phenylgruppe darstellt, R₁ und R₂ gleich oder verschieden und unabhängig ein Wasserstoff, ein Hydroxyl, ein C₇-₃0-Aryl, ein C₁-₁₂-Alkoxy oder ein C₁-₁₂-Alkyl sind.

8. Flammenwidrige Zusammensetzung nach einem von Anspruch 1, wobei das Phosphazen-Flammschutzmittel ein Phenoxyphosphazen ist.

9. Flammenwidrige Zusammensetzung nach Anspruch 1, ferner ein Tropfbildung verhinderndes Mittel umfassend.

10. Flammenwidrige Zusammensetzung nach einem der Ansprüche 1 bis 9, wobei die Zusammensetzung außer dem Phosphazen-Flammschutzmittel kein Flammschutzmittel enthält.

11. Flammenwidrige Zusammensetzung nach einem der Ansprüche 1 bis 10, wobei die flammenwidrige Zusammensetzung 3 bis 30 Gewichtsprozent eines Schlagzähigkeitsverbessers, auf das Gesamtgewicht der flammenwidrigen Zusammensetzung bezogen, umfasst.

12. Verfahren für die Herstellung einer flammenwidrigen Zusammensetzung umfassend das Abmischen von: 10 bis 75 Gewichtsprozent eines Polycarbonats; 10 bis 30 Gewichtsprozent eines Polyesters; 10 bis 35 Gewichtsprozent eines Polysiloxan-Polycarbonat-Copolymers; und eines Phosphazen-Flammschutzmittels, wobei alle Gewichtsprozentsätze auf dem Gesamtgewicht der flammenwidrigen Zusammensetzung basieren.

13. Verfahren nach Anspruch 12, ferner das Abmischen eines Tropfenbildung verhindernden Mittels umfassend.

14. Verfahren nach einem der Ansprüche 12 oder 13, ferner das Formen der flammenwidrigen Zusammensetzung umfassend.

15. Artikel, der aus der Zusammensetzung nach Anspruch 1 hergestellt ist.

## Revendications

1. Composition ignifugeante comprenant :
10 à 75 % en poids d'un polycarbonate ;
10 à 30 % en poids d'un polyester ;
10 à 35 % en poids d'un copolymère de polysiloxane-polycarbonate ; et
un retardateur de flamme à base de phosphazène, dans laquelle tous les pourcentages en poids sont rapportés au poids total de la composition ignifugeante.

2. Composition ignifugeante selon la revendication 1, dans laquelle le polyester est du poly(téréphtalate d'éthylène), du poly(téréphtalate de 1,4-butylène), du poly(téréphtalate de propylène), des poly(naphtalate d'alkylène), du poly(naphtalate d'éthylène), du poly(naphtalate de butylène), du poly(téréphtalate de cyclohexane-diméthylène), du copolymère de poly(téréphtalate de cyclohexanediméthylène)-poly(téréphtalate d'éthylène), du poly(téréphtalate de 1,4-cyclohexanediméthylène), des poly(cyclohexanedicarboxylate d'alkylène), du poly(1,4-cyclohexanedicarboxylate de 1,4-cyclohexanediméthanol), ou une combinaison comprenant au moins l'un des polyesters précédents.

3. Composition ignifugeante selon la revendication 1, dans laquelle le copolymère de polysiloxane-polycarbonate comprend entre 15 et 25 % en poids de polysiloxane, rapporté au poids total du copolymère de polysiloxane-polycarbonate.

4. Composition ignifugeante selon la revendication 1, dans laquelle le retardateur de flamme à base de phosphazène est présent en une quantité comprise entre 1 à 20 % en poids, rapporté au poids total de la composition ignifugeante.

5. Composition ignifugeante selon la revendication 1, dans laquelle le retardateur de flamme à base de phosphazène a la structure de formule (24) 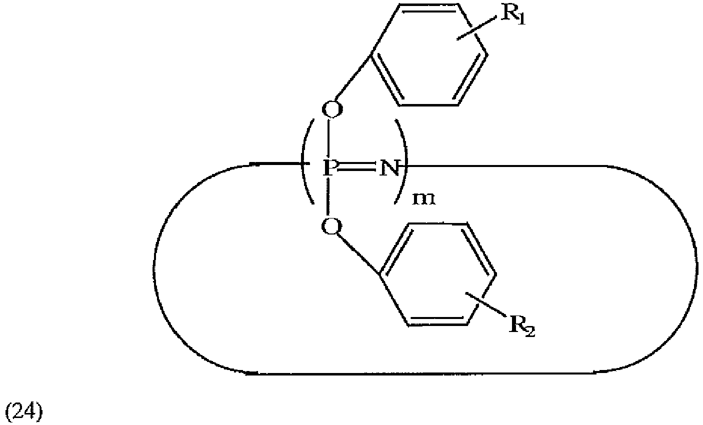 dans laquelle formule (24), m représente un nombre entier compris entre 3 et 25, R₁ et R₂ sont identiques ou différents et représentent indépendamment l'un de l'autre un atome d'hydrogène, un groupe hydroxyle, un groupe aryle en C₇₋₃₀, un groupe alcoxy en C₁₋₁₂, ou un groupe alkyle en C₁₋₁₂.

6. Composition ignifugeante selon la revendication 1, dans laquelle le retardateur de flamme à base de phosphazène est du phénoxy cyclotriphosphazène, de l'octaphénoxy cyclotétraphosphazène, du décaphénoxy cyclopentaphosphazène, ou une combinaison comprenant au moins l'un des composés phosphazène précédents.

7. Composition ignifugeante selon la revendication 1, dans laquelle le retardateur de flamme à base de phosphazène a la structure de formule (25) 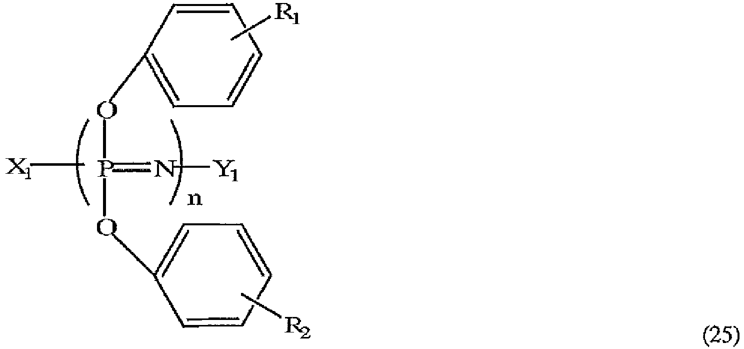 dans laquelle formule (25), X¹ représente un groupe -N=P(OPh)₃ ou un groupe -N=P(O)OPh, Y¹ représente un groupe -P(OPh)₄ ou un groupe -P(O)(OPh)₂, n représente un nombre entier compris entre 3 et 10 000, Ph représente un groupe phényle, R₁ et R₂ sont identiques ou différents et représentent indépendamment l'un de l'autre un atome d'hydrogène, un groupe hydroxyle, un groupe aryle en C₇₋₃₀, un groupe alcoxy en C₁₋₁₂, ou un groupe alkyle en C₁₋₁₂.

8. Composition ignifugeante selon la revendication 1, dans laquelle le retardateur de flamme à base de phosphazène est un phénoxy phosphazène.

9. Composition ignifugeante selon la revendication 1, laquelle comprend en outre un agent anti-gouttes.

10. Composition ignifugeante selon l'une des revendications 1 à 9, dans laquelle la composition ignifugeante ne comprend pas d'autre retardateur de flamme que le retardateur de flamme à base de phosphazène.

11. Composition ignifugeante selon l'une des revendications 1 à 10, dans laquelle la composition ignifugeante comprend entre 3 et 30 % en poids d'un modificateur d'impact, rapporté au poids total de la composition ignifugeante.

12. Procédé de fabrication d'une composition ignifugeante comprenant l'action de mélanger: 10 à 75 % en poids d'un polycarbonate; 10 à 30 % en poids d'un polyester; 10 à 35 % en poids d'un copolymère de polysiloxane-polycarbonate , et un retardateur de flamme à base de phosphazène, dans lequel tous les pourcentages en poids sont rapportés au poids total de la composition ignifugeante.

13. Procédé selon la revendication 12, comprenant en outre l'action de mélanger un agent anti-gouttes.

14. Procédé selon la revendication 12 ou 13, comprenant en outre l'action de mouler la composition ignifugeante.

15. Article fabriqué à partir de la composition selon la revendication 1.
